(19) Europäisches Patentamt
European Patent Office
Office européen des brevets

(11) **EP 1 328 799 B1**

(12) **EUROPÄISCHE PATENTSCHRIFT**

(45) Veröffentlichungstag und Bekanntmachung des Hinweises auf die Patenterteilung:
**31.08.2005 Patentblatt 2005/35**

(21) Anmeldenummer: **01987879.2**

(22) Anmeldetag: **16.10.2001**

(51) Int Cl.$^7$: **G01N 27/49**, G01D 3/02

(86) Internationale Anmeldenummer:
**PCT/DE2001/003949**

(87) Internationale Veröffentlichungsnummer:
**WO 2002/033397 (25.04.2002 Gazette 2002/17)**

(54) **ELEKTRONISCHE SCHALTUNG, SENSORANORDNUNG UND VERFAHREN ZUM VERARBEITEN EINES SENSORSIGNALS**

ELECTRONIC CIRCUIT, SENSOR ARRANGEMENT AND METHOD FOR PROCESSING A SENSOR SIGNAL

CIRCUIT ELECTRONIQUE, ENSEMBLE CAPTEUR ET PROCEDE POUR TRAITER UN SIGNAL DE CAPTEUR

(84) Benannte Vertragsstaaten:
**AT BE CH CY DE DK ES FI FR GB GR IE IT LI LU MC NL PT SE TR**

(30) Priorität: **16.10.2000 DE 10051178**

(43) Veröffentlichungstag der Anmeldung:
**23.07.2003 Patentblatt 2003/30**

(73) Patentinhaber: **Infineon Technologies AG**
**81669 München (DE)**

(72) Erfinder:
 • **FREY, Alexander**
   **81735 München (DE)**
 • **PAULUS, Christian**
   **82362 Weilheim (DE)**
 • **THEWES, Roland**
   **82194 Gröbenzell (DE)**

(74) Vertreter: **Dokter, Eric-Michael**
**Anwaltskanzlei,**
**Viering, Jentschura & Partner,**
**Steinsdorfstrasse 6**
**80538 München (DE)**

(56) Entgegenhaltungen:
EP-A- 0 939 483     WO-A-01/75149
GB-A- 2 099 247     US-A- 6 002 355

 • **PAESCHKE M ET AL: "VOLTAMMETRIC MULTICHANNEL MEASUREMENTS USING SILICON FABRICATED MICROELECTRODE ARRAYS" ELECTROANALYSIS, VHC PUBLISHERS, INC, US, Bd. 8, Nr. 10, Oktober 1996 (1996-10), Seiten 891-898, XP000863360 ISSN: 1040-0397 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine elektronische Schaltung, eine Sensoranordnung und ein Verfahren zum Verarbeiten eines Sensorsignals.

Eine solche Sensoranordnung ist als ein Biosensorchip aus [1] bekannt.

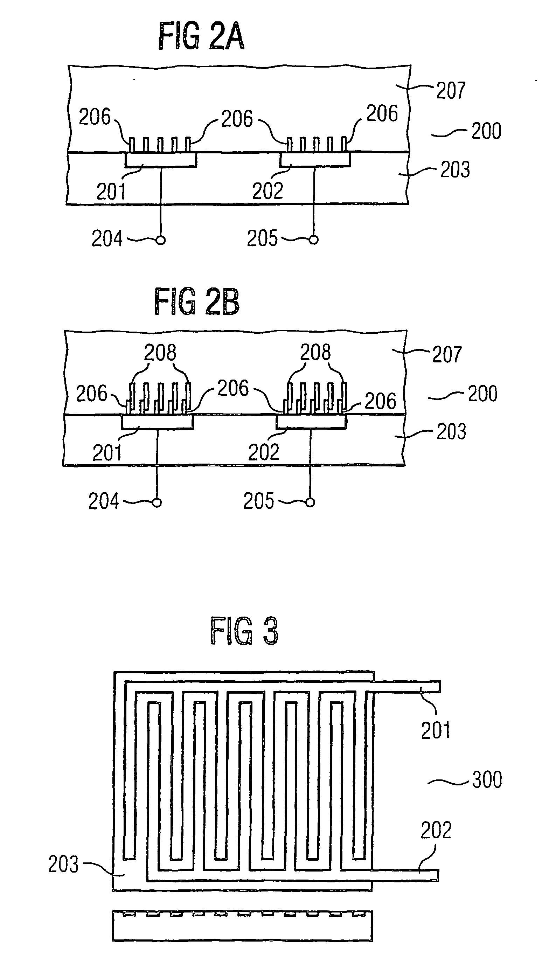

**Fig.2a** und **Fig.2b** zeigen einen solchen Biosensorchip, wie er in [1] beschrieben ist. Der Sensor 200 weist zwei Elektroden 201, 202 aus Gold auf, die in einer Isolatorschicht 203 aus Isolatormaterial eingebettet sind. An die Elektroden 201, 202 sind Elektroden-Anschlüsse 204, 205 angeschlossen, an denen das an der Elektrode 201, 202 anliegende elektronische Potential zugeführt werden kann. Die Elektroden 201, 202 sind als Planarelektroden angeordnet. Auf jeder Elektrode 201, 202 sind DNA-Sondenmoleküle 206 immobilisiert (vgl. **Fig.2a).** Die Immobilisierung erfolgt gemäß der Gold-Schwefel-Kopplung. Auf den Elektroden 201, 202 ist das zu untersuchende Analyt, beispielsweise ein Elektrolyt 207, aufgebracht.

Sind in dem Elektrolyt 207 DNA-Stränge 208 mit einer Sequenz enthalten, die zu der Sequenz der DNA-Sondenmoleküle 206 komplementär ist, so hybridisieren diese DNA-Stränge 208 mit den DNA-Sondenmolekülen 206 (vgl. **Fig.2b).**

Eine Hybridisierung eines DNA-Sondenmoleküls 206 und eines DNA-Strangs 208 findet nur dann statt, wenn die Sequenzen des jeweiligen DNA-Sondenmoleküls 206 und des entsprechenden DNA-Strangs 208 zueinander komplementär sind. Ist dies nicht der Fall, so findet keine Hybridisierung statt. Somit ist ein DNA-Sondenmolekül einer vorgegebenen Sequenz jeweils nur in der Lage einen bestimmten, nämlich den DNA-Strang mit jeweils komplementärer Sequenz zu binden, d.h. mit ihm zu hybridisieren.

Findet eine Hybridisierung statt, so verändert sich, wie aus **Fig.2b** ersichtlich, der Wert der Impedanz zwischen den Elektroden 201 und 202. Diese veränderte Impedanz wird durch Anlegen einer Wechselspannung mit einer Amplitude von ungefähr 50 mV an die Elektroden-Anschlüsse 204, 205 und dem dadurch resultierenden Strom mittels eines angeschlossenen Messgeräts (nicht dargestellt) bestimmt.

Im Falle einer Hybridisierung verringert sich der kapazitive Anteil der Impedanz zwischen den Elektroden 201, 202. Dies ist darauf zurückzuführen, dass sowohl die DNA-Sondenmoleküle 206 als auch die DNA-Stränge 208, die eventuell mit den DNA-Sondenmolekülen 206 hybridisieren, nicht-leitend sind und somit anschaulich die jeweilige Elektrode 201, 202 in gewissem Maße elektronisch abschirmen.

Zur Verbesserung der Messgenauigkeit ist es aus [4] bekannt, eine Vielzahl von Elektrodenpaaren 201, 202 zu verwenden und diese parallel zu schalten, wobei diese anschaulich miteinander verzahnt angeordnet sind, so dass sich eine sogenannte Interdigitalelektrode 300 ergibt (vgl. **Fig.3).** Die Abmessung der Elektroden und der Abstände zwischen den Elektroden liegen in der Größenordnung der Länge der zu detektierenden Moleküle, d.h. der DNA-Stränge 208 oder darunter, beispielsweise im Bereich von 200 nm und darunter.

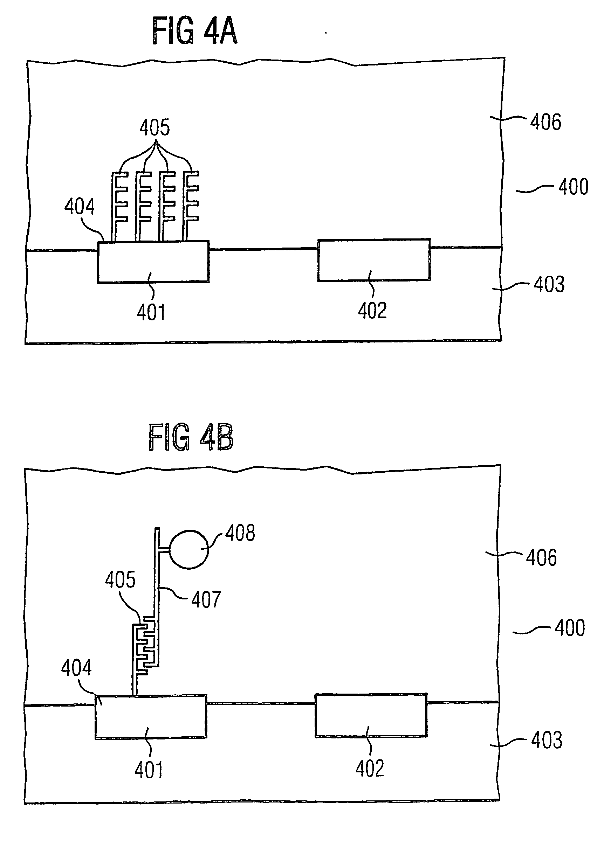

Weiterhin sind Grundlagen über einen Reduktions-/Oxidations-Recycling-Vorgang zum Erfassen makromolekularer Biopolymere aus [2] und [3] bekannt. Der Reduktions-/Oxidations-Recycling-Vorgang, im weiteren auch als Redox-Recycling-Vorgang bezeichnet, wird im weiteren anhand der **Fig.4a** bis **Fig.4c** näher erläutert.

**Fig.4a** zeigt einen Biosensorchip 400 mit einer ersten Elektrode 401 und einer zweiten Elektrode 402, die auf einem Substrat 403 als Isolatorschicht aufgebracht sind.

Auf der ersten Elektrode 401 aus Gold ist ein Haltebereich, ausgestaltet als Halteschicht 404, aufgebracht. Der Haltebereich dient zum Immobilisieren von DNA-Sondenmolekülen 405 auf der ersten Elektrode 401.

Auf der zweiten Elektrode ist kein solcher Haltebereich vorgesehen.

Sollen mittels des Biosensors 400 DNA-Stränge mit einer Sequenz, die komplementär ist zu der Sequenz der immobilisierten DNA-Sondenmoleküle 405 erfasst werden, so wird der Sensor 400 mit einer zu untersuchenden Lösung 406, beispielsweise einem Elektrolyt, in Kontakt gebracht derart, dass in der zu untersuchenden Lösung 406 eventuell enthaltene DNA-Stränge mit der komplementären Sequenz zu der Sequenz der DNA-Sondenmoleküle 405 hybridisieren können.

**Fig.4b** zeigt den Fall, dass in der zu untersuchenden Lösung 406 die zu erfassenden DNA-Stränge 407 enthalten sind und mit die DNA-Sondenmoleküle 405 hybridisiert sind.

Die DNA-Stränge 407 in der zu untersuchenden Lösung sind mit einem Enzym 408 markiert, mit dem es möglich ist, im weiteren beschriebene Moleküle in Teilmoleküle zu spalten.

Üblicherweise ist eine erheblich größere Anzahl von DNA-Sondenmolekülen 405 vorgesehen, als zu ermittelnde DNA-Stränge 407 in der zu untersuchenden Lösung 406 enthalten sind.

Nachdem die in der zu untersuchenden Lösung 406 eventuell enthaltenen, mit dem Enzym 408 mit den immobilisierten DNA-Sondenmolekülen 407 hybridisiert sind, erfolgt eine Spülung des Biosensorchips 400, wodurch die nicht hybridisierten DNA-Stränge entfernt werden und der Biosensorchip 400 von der zu untersuchenden Lösung 406 gereinigt wird.

Dieser zur Spülung verwendeten Spüllösung oder einer in einer weiteren Phase eigens zugeführten weiteren Lösung wird eine elektronisch ungeladene Substanz beigegeben, die Moleküle enthält, die durch das Enzym an den hybridisierten DNA-Strängen 407 gespalten werden können in ein erstes Teilmolekül 410 mit einer negativen elektronischen Ladung und in ein zweites Teilmolekül mit einer positiven elektronischen Ladung.

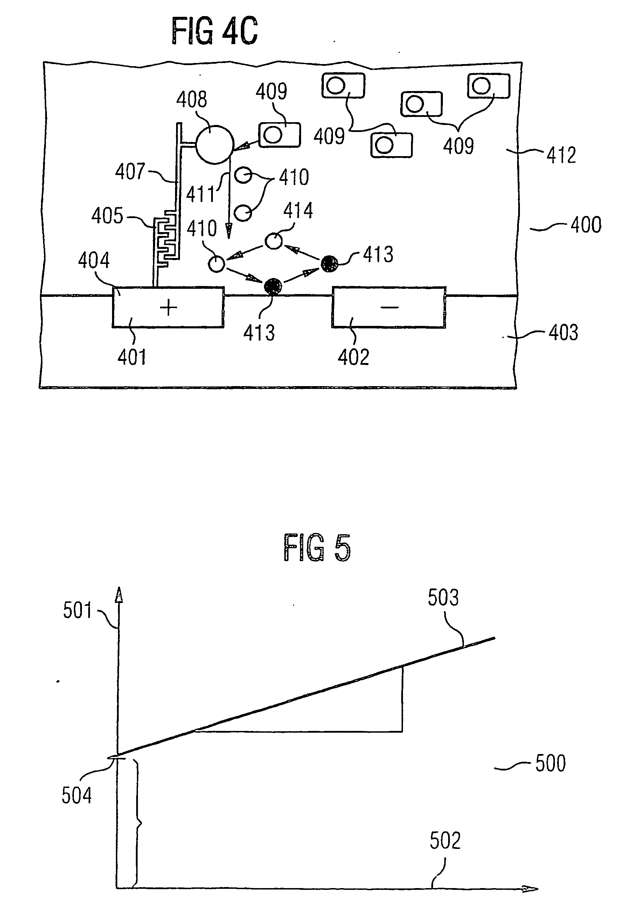

Die negativ geladenen ersten Teilmoleküle 410 werden, wie in **Fig.4c** gezeigt ist, zu der positiv geladenen Anode gezogen, d.h. zu der ersten Elektrode 401, wie durch den Pfeil 411 in **Fig.4c** angedeutet ist.

Die negativ geladenen ersten Teilmoleküle 410 werden an der ersten Elektrode 401, die als Anode ein positives elektronisches Potential aufweist, oxidiert und werden als oxidierte Teilmoleküle 413 an die negativ geladene Katode, d.h. die zweite Elektrode 402 gezogen, wo sie wieder reduziert werden. Die reduzierten Teilmoleküle 414 wiederum wandern zu der ersten Elektrode 401, d.h. zu der Anode.

Auf diese Weise wird ein elektronischer Kreisstrom generiert, der proportional ist zu der Anzahl der jeweils durch die Enzyme 408 erzeugten Ladungsträger.

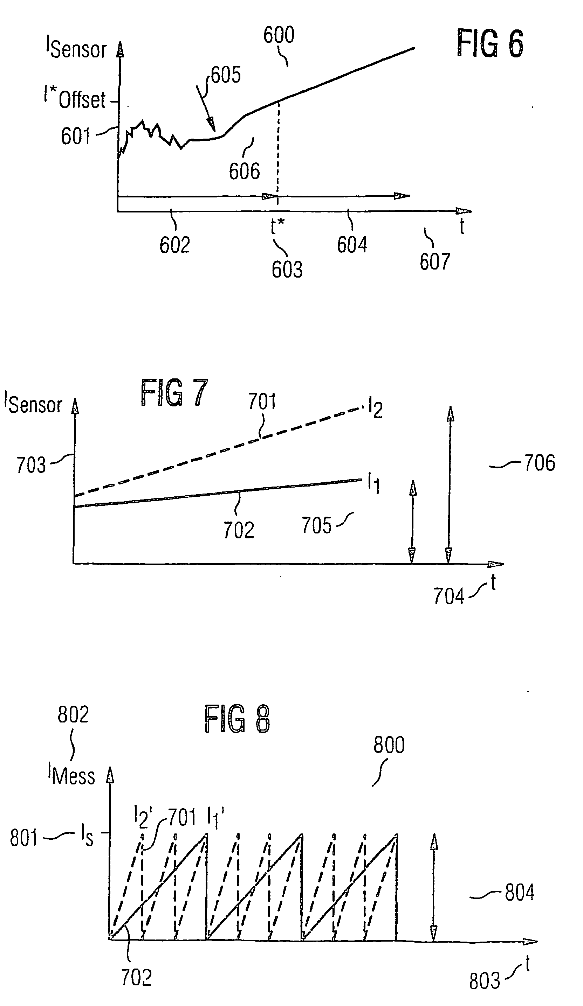

Der elektronische Parameter, der bei dieser Methode ausgewertet wird, ist die Änderung des elektronischen Stroms $m = \frac{dI}{dt}$ als Funktion der Zeit t, wie dies in dem Diagramm 500 in **Fig.5** schematisch dargestellt ist.

**Fig.5** zeigt die Funktion des elektronischen Stroms 501 abhängig von der Zeit 502. Der sich ergebende Kurvenverlauf 503 weist einen Offsetstrom $I_{offset}$ 504 auf, der unabhängig ist vom zeitlichen Verlauf.

Der Offsetstrom $I_{offset}$ 504 wird erzeugt durch parasitäre Anteile aufgrund von Nichtidealitäten des Biosensors 400.

Eine wesentliche Ursache für den Offsetstrom $I_{offset}$ 504 liegt darin, dass die Bedeckung der ersten Elektrode 401 mit DNA-Sondenmolekülen 405 nicht ideal, d.h. nicht vollständig dicht erfolgt.

Im Falle einer vollständig dichten Bedeckung der ersten Elektrode 401 mit DNA-Sondenmolekülen 405 ergäbe sich aufgrund der sogenannten Doppelschichtkapazität, die durch die immobilisierten DNA-Sondenmoleküle 405 entsteht, zwischen der ersten Elektrode 401 und der elektronisch leitenden zu untersuchenden Lösung 406 nur eine rein kapazitive elektronische Kopplung.

Die nicht vollständige Bedeckung führt jedoch zu parasitären Strompfaden zwischen der ersten Elektrode 401 und der zu untersuchenden Lösung 406, die unter anderem auch ohmsche Anteile aufweisen.

Um jedoch den Oxidations-/Reduktions-Prozess zu ermöglichen, darf die Bedeckung der ersten Elektrode 401 mit dem DNA-Sondenmolekülen 405 nicht vollständig sein, damit die elektronisch geladenen Teilmoleküle, d.h. die negativ geladenen ersten Teilmoleküle zu der ersten Elektrode 401 überhaupt angezogen werden.

Um andererseits eine möglichst große Sensitivität eines solchen Biosensors zu erreichen, verbunden mit geringen parasitären Effekten, sollte die Bedeckung der ersten Elektrode 401 mit DNA-Sondenmolekülen 405 möglichst dicht sein.

Um eine hohe Reproduzierbarkeit der mit einem solchen Biosensor 400 bestimmten Messwerte zu erreichen, müssen beide Elektroden 401, 402 stets ein hinreichend großes Flächenangebot für den Oxidations-/Reduktions-Prozess im Rahmen des Redox-Recycling-Vorgangs bereitstellen.

Bei dem Biosensor gemäß dem Stand der Technik, ergibt sich somit eine gewisse Messunsicherheit beim Ermitteln der DNA-Stränge in einer zu untersuchenden Lösung.

Unter makromolekularen Biopolymeren sind im Weiteren beispielsweise Proteine oder Peptide oder auch DNA-Stränge einer jeweils vorgegebenen Sequenz zu verstehen.

Sollen als makromolekulare Biopolymere Proteine oder Peptide erfasst werden, so sind die ersten Moleküle und die zweiten Moleküle Liganden, beispielsweise Wirkstoffe mit einer möglichen Bindungsaktivität, die die zu erfassenden Proteine oder Peptide an die jeweilige Elektrode binden, auf der die entsprechenden Liganden angeordnet sind.

Als Liganden kommen Enzymagonisten oder Enzymantagonisten, Pharmazeutika, Zucker oder Antikörper oder irgendein Molekül in Betracht, das die Fähigkeit besitzt, Proteine oder Peptide spezifisch zu binden.

Werden als makromolekulare Biopolymere DNA-Stränge einer vorgegebenen Sequenz verwendet, die mittels des Biosensors erfasst werden sollen, so können mittels des Biosensors DNA-Stränge einer vorgegebenen Sequenz mit DNA-Sondenmolekülen mit der zu der Sequenz der DNA-Stränge komplementären Sequenz als Moleküle auf der ersten Elektrode hybridisiert werden.

Im Rahmen dieser Beschreibung ist unter einem Sondenmolekül sowohl ein Ligand als auch ein DNA-Sondenmolekül zu verstehen.

Der Wert m ist proportional zur Elektrodenfläche der zur Erfassung des Messstroms verwendeten Elektroden. Bei gleichbleibender Breite der Elektroden ist somit der Wert m proportional zur Längsausdehnung der verwendeten Elektroden, beispielsweise bei der ersten Elektrode 201 und der zweiten Elektrode 202 deren Länge senkrecht zur Zeichenebene in **Fig.2a** und **Fig.2b.**

Sind mehrere Elektroden parallel geschaltet, beispielsweise in der bekannten Interdigitalelektrodenanordnung, so ist die Änderung des Messstroms m ferner proportional zur Anzahl der jeweils parallel geschalteten Elektroden.

Der Wert der Änderung des Messstroms m kann jedoch aufgrund unterschiedlicher Einflüsse einen sehr stark schwankenden Wertebereich aufweisen, insbesondere für unterschiedliche zu untersuchende Lösungen.

Ursache für die starken Schwankungen kann zum einen der für nachzuweisende DNA-Stränge einer vorgegebenen Sequenz geforderte Dynamikbereich sein, um deren Erfassung überhaupt zu ermöglichen.

Zum anderen ist es jedoch auch möglich, dass unterschiedliche nachzuweisende makromolekulare Biopolymere unterschiedlicher Typen zu stark unterschiedlichen Wertebereichen für das sich ergebende Messsignal, d.h. insbesondere den Messstrom und dessen zeitliche Änderung m führen, was wiederum zu einer Ausweitung des erforderlichen gesamten Dynamikbereichs für eine vorgegebene Elektrodenkonfiguration mit nachfolgender einheitlicher Messelektronik, d.h. mit nachfolgender einheitlicher Messschaltung führt.

Die Messelektronik, die die zeitliche Veränderung zwischen den Elektroden, d.h. zwischen Anode und Katode erfasst und weiterverarbeitet, muss in den geforderten Wertebereichen verlässlich und genau funktionieren.

Die Anforderungen an den großen Dynamikbereich einer solchen Schaltung führen dazu, dass die Messelektronik teuer und kompliziert ausgestaltet ist, um den erforderlichen Dynamikbereich bereitzustellen.

Auch bei anderen Verfahren, wie sie beispielsweise aus [4], [5], [6], [7], [8] bekannt sind, kann der Fall auftreten, dass die zu detektierenden elektronischen Messsignale über einen großen Dynamikbereich messbar sein müssen.

Auch dort können sich extreme Anforderungen an die Messelektronik, d.h. die Auswerteschaltung bezüglich ihrer Dynamik ergeben. Insbesondere beim Schaltungsentwurf werden die Nicht-Idealitäten der verwendeten Bauelemente, d.h. ein Rauschen, die Variation der Parameter der Bauelemente, in der Form berücksichtigt, dass für diese Bauelemente in der entworfenen Schaltung ein Arbeitspunkt gewählt wird, in dem diese Nicht-Idealitäten einen möglichst geringen Einfluss auf die Qualität des Messergebnisses haben. Sofern eine Schaltung über einen großen Dynamikbereich betrieben werden soll, wird die Einhaltung eines optimalen Arbeitspunktes für alle Bereiche zunehmend schwieriger und aufwendiger.

Weiterhin ist insbesondere in den oben dargestellten Anforderungen der Offsetstrom $I_{offset}$ sehr viel größer ist als die zeitliche Änderung des Messstroms m über die gesamte Messdauer, d.h. Messzeit $t_{mess}$ ist, d.h. es gilt

$$I_{offset} >> m \cdot t_{mess}. \tag{1}$$

Es muss dann also innerhalb eines großen Signals (Offsetstrom $I_{offset}$) eine sehr kleine zeitabhängige Änderung (zeitliche Änderung des Messstroms) mit hoher Genauigkeit gemessen werden.

Damit ergeben sich sehr hohe Anforderungen an die eingesetzten Messinstrumente.

Der Wert des Parameters m = dI/dt kann für verschiedene zu untersuchende Analyten, wie oben dargestellt, in einem großen Wertebereich liegen.

Ursache dafür kann zum einen der für eine nachzuweisende Spezies geforderte Dynamikbereich sein, zum anderen ist es jedoch auch möglich, dass unterschiedliche nachzuweisende Spezies von vornherein zu stark unterschiedlichen Wertebereichen für das resultierende Messsignal führen, was wiederum einer Ausweitung des geforderten gesamten Dynamikbereiches entspricht.

Eine elektronische Schaltung, welche die zeitliche Veränderung des Kreisstromes zwischen Anode und Kathode registriert und weiterverarbeitet, muss somit in dem entsprechenden Wertebereich sicher funktionieren.

Die Anforderungen an den Dynamikbereich dieser Schaltung sind somit ausgesprochen hoch.

Es ist bekannt, beim Schaltungsdesign die Nicht-Idealitäten der verwendeten Bauelemente (Rauschen, Parametervariationen) in der Form zu berücksichtigen, dass für diese Bauelemente in der Schaltung ein Arbeitspunkt gewählt wird, in dem diese Nicht-Idealitäten eine möglichst geringe Rolle spielen.

Sofern eine Schaltung über einen großen Dynamikbereich betrieben werden soll, wird die Einhaltung eines optimalen Arbeitspunktes über alle Bereiche jedoch zunehmend schwieriger, aufwendiger und damit teurer.

Weiterhin sind aus den Dokumenten [10], [11], [12], [13], [14], [15], [16], [17], [18], [19], [20] elektrische Schaltungen zur Spannungs-Offsetkompensation eines Spannungssignals an einem Eingang eines Operationsverstärkers bekannt.

Der Erfindung liegt das Problem zugrunde, aus einem Sensorsignal, welches einen Strom-Offset-Signalanteil und einen zeitabhängigen, d.h. über die Zeit sich verändernden, Messsignalanteil aufweist, den Messsignalanteil mit verbesserter Genauigkeit zu ermitteln.

Das Problem wird durch die elektronische Schaltung, die Sensoranordnung und das Verfahren zum Verarbeiten eines Sensorsignals mit den Merkmalen gemäß den unabhängigen Patentansprüchen gelöst.

Eine elektronische Schaltung zum Verarbeiten eines ersten Sensorsignals, welches ein Strom-Offsetsignal und ein zeitabhängiges Messsignal aufweist, oder eines zweiten Sensorsignals, welches im wesentlichen das Strom-Offsetsignal aufweist, weist einen Eingang auf, an dem das erste Sensorsignal oder das zweite Sensorsignal anlegbar ist. Der Eingang ist mit einem ersten Signalpfad zum Ableiten des Strom-Offsetsignals sowie mit einem zweiten Signalpfad zum Ableiten des zeitabhängigen Messsignals gekoppelt.

Weiterhin ist eine Regelungseinheit vorgesehen. Die Regelungseinheit ist derart eingerichtet, dass in der elektronischen Schaltung eine Regelung erfolgt in einer Weise, dass für den Fall, dass das zweite Sensorsignal an dem Eingang der elektronischen Schaltung anliegt, das zweite Sensorsignal im wesentlichen nur durch den ersten Signalpfad geführt wird.

Anschaulich bedeutet dies, dass durch die von der Regelungseinheit durchgeführten Regelung ein Signalanteil, der zu Beginn der Regelung noch durch den zweiten Signalpfad geführt wird, nach Abschluss der Regelung im wesentlichen vollständig durch den ersten Signalpfad geführt wird.

Somit wird anders ausgedrückt mit Hilfe einer geeigneten elektronischen Schaltung, der Regelungseinheit, das erste Sensorsignal registriert und der vollständige Abfluss in den dafür vorgesehenen Offsetkanal, d.h. den ersten Signalpfad erzwungen.

Da das erste Sensorsignal im wesentlich nur aus dem Strom-offsetanteil des Sensorsignal, d.h. beispielsweise dem Offsetstrom besteht, wird durch die Regelungseinheit gewährleistet, dass der gesamte Offsetstrom in den ersten Signalpfad, der in dem Fall eines Offsetstroms einen ersten Strompfad darstellt, geführt wird.

Das erste Sensorsignal wird beispielsweise erzeugt, indem der Sensor ein Sensorsignal liefert, obwohl noch gar keine zu erfassenden Moleküle an den Sensor geführt werden. Somit repräsentiert das erste Sensorsignal anschaulich den Sensor in mit beispielsweise zu erfassenden makromolekularen Biopolymeren unbelegtem Zustand.

In dem ersten Signalpfad ist ein Spannungswertspeicherelement enthalten ist, mit dem das zweite Sensorsignal gespeichert werden kann, wenn das zweite Sensorsignal an dem Eingang anliegt. Das Spannungswertspeicherelement dient somit anschaulich zur Speicherung im wesentlichen des Strom-Offsetanteils des Sensorsignals.

Wird das erste Sensorsignal an den Eingang angelegt, wird das in dem Spannungswertspeicherelement gespeicherte zweite Sensorsignal dem Eingang zugeführt.

Da in diesem Fall dem Eingang sowohl das zweite Sensorsignal mit dem Strom-Offsetsignal und dem zeitabhängigen Messsignal, als auch das erste Sensorsignal und damit im Wesentlichen das Strom-Offsetsignal zugeführt sind, und mit dem Eingang, d.h. anschaulich dem Eingangsknoten, auch der zweite Signalpfad gekoppelt ist, ergibt sich gemäß der Kirchhoff'schen Knotenregel, dass im Wesentlichen nur das zeitabhängige Messsignal in den zweiten Signalpfad fließt.

Auf diese Weise wird eine sehr einfache und dennoch sehr genaue Strom-Offset-Kompensation des Strom-Offsetanteils des Sensorsignals erreicht.

Damit eignet sich die elektrische Schaltung insbesondere zum Einsatz beim Erfassen makromolekularer Biopolymere, in deren Rahmen der Strom-Offsetanteil des Sensorsignals um mehrere Größenordnungen größer sein kann als der Messsignalanteil.

Somit eignet sich die elektrische Schaltung insbesondere zum Einsatz in einer Sensoranordnung, vorzugsweise in einer Biosensoranordnung, beispielsweise in einem Biosensorchip, in dem sowohl der Sensor als Sensorsignalgeber als auch die elektronische Schaltung als Auswerteschaltung integriert sind.

Bei einem Verfahren zum Verarbeiten eines Sensorsignals, welches ein Strom-Offsetsignal und ein zeitabhängiges Messsignal aufweist, wird in einer ersten Phase ein erstes Sensorsignal an einen Eingang einer elektronischen Schaltung angelegt, wobei das erste Sensorsignal im wesentlichen das Strom-Offsetsignal aufweist. Das erste Sensorsignal wird im wesentlichen in einen mit dem Eingang gekoppelten ersten Signalpfad geführt wird und dort gespeichert, vorzugsweise in einem Signalspeicherelement.

In einer zweiten Phase wird ein zweites Sensorsignal an den Eingang angelegt, wobei das zweite Sensorsignal das Strom-Offsetsignal sowie ein zeitabhängiges Messsignal aufweist. In der zweiten Phase wird das gespeicherte erste Sensorsignal dem Eingang über den ersten Signalpfad zugeführt wird, so dass über einen mit dem Eingang gekoppelten zweiten Signalpfad im wesentlichen das zeitabhängige Messsignal geführt wird.

Wie oben erläutert eignen sich sowohl die elektronische Schaltung als auch das Verfahren insbesondere zum Einsatz beim Erfassen makromolekularer Biopolymere.

Insbesondere eignet sich die Sensoranordnung zum Einsatz im oben beschriebenen Redox-Recycling-Verfahren. In diesem Fall wird der Redox-Recycling-Prozess während der zweiten Phase durchgeführt und der ermittelte Stromverlauf wird als zweites Sensorsignal der elektronischen Schaltung zugeführt, in der der Messsignalanteil, d.h. der Messstrom, von dem Offsetstrom getrennt wird.

Unter makromolekularen Biopolymeren sind beispielsweise Proteine oder Peptide oder auch DNA-Stränge einer jeweils vorgegebenen Sequenz zu verstehen.

Sollen als makromolekulare Biopolymere Proteine oder Peptide erfasst werden, so sind die Moleküle Liganden, beispielsweise Wirkstoffe mit einer möglichen Bindungsaktivität, die die zu erfassenden Proteine oder Peptide an die jeweilige Elektrode binden, auf der die entsprechenden Liganden angeordnet sind.

Als Liganden kommen Enzymagonisten oder Enzymantagonisten, Pharmazeutika, Zucker oder Antikörper oder irgendein Molekül in Betracht, das die Fähigkeit besitzt, Proteine oder Peptide spezifisch zu binden.

Werden als makromolekulare Biopolymere DNA-Stränge einer vorgegebenen Sequenz verwendet, die mittels des Biosensors erfasst werden sollen, so können mittels des Biosensors DNA-Stränge einer vorgegebenen Sequenz mit DNA-Sondenmolekülen mit der zu der Sequenz der DNA-Stränge komplementären Sequenz als Moleküle auf der ersten Elektrode eines oben im Zusammenhang mit dem Stand der Technik beschriebenen Sensors hybridisiert werden.

Im Rahmen dieser Beschreibung ist unter einem Sondenmolekül sowohl ein Ligand als auch ein DNA-Sondenmolekül zu verstehen.

Der Haltebereich der ersten Elektrode kann mit einem Material beschichtet sein, das Sondenmoleküle immobilisieren kann.

Der Haltebereich der ersten Elektrode kann ferner zum Halten von Liganden ausgestaltet sein, mit denen Peptide oder Proteine gebunden werden können.

Der Haltebereich der ersten Elektrode kann ferner zum Halten von DNA-Sondenmolekülen ausgestaltet sein, mit denen DNA-Moleküle gebunden werden können.

Der erste Haltebereich kann zumindest eines der folgenden Materialien enthalten:

- Hydroxylreste,
- Epoxidreste,
- Aminreste,
- Acetoxyreste,
- Isocyanatreste,
- Succinimidylesterreste,
- Thiolreste,
- Gold,
- Silber,
- Platin,
- Titan.
  Als Enzym können beispielsweise
- a-Galactosidase,
- b-Galactosidase,
- b-Glucosidase,
- a-Mannosidase,
- Alkaline Phosphatase,
- Acidic Phosphatase,
- Oligosaccharide Dehydrogenase,
- Glucose Dehydrogenase,
- Laccase,
- Tyrosinase,
- oder artverwandte Enzyme verwendet werden.

Es ist anzumerken, dass niedermolekulare Enzyme die höchste Umsatzeffizienz und daher auch die höchste Empfindlichkeit gewährleisten können.

In der weiteren Lösung sind somit Moleküle enthalten, die durch das Enzym gespalten werden können in ein erstes Teilmolekül mit negativer elektronischer Ladung und in ein zweites Teilmolekül mit positiver elektronischer Ladung.

Als das spaltbare Molekül im Rahmen des Redox-Recycling-Prozesses können vor allem beispielsweise

- p-Aminophenyl-hexopyranoside,
- p-Aminophenyl-phosphate,
- p-Nitrophenyl-hexopyranoside,
- p-Nitrophenyl-phosphate, oder
- geeignete Derivate von

  a) Diaminen,
  b) Catecholaminen,
  c) $Fe(CN)_4$,
  d) Ferrocen,
  e) Dicarboxylsäure,
  f) Ferrocenlysin,
  g) Osmiumbipyridyl-NH, oder
  h) PEG-Ferrocen2

verwendet werden.

Gemäß einer Ausgestaltung der Erfindung weist die elektronische Schaltung einen Ausgang auf, an dem ein Ausgangssignal abgreifbar ist, das im Wesentlichen dem Messsignal in dem zweiten Sensorsignal entspricht. Weiterhin ist gemäß dieser Ausgestaltung der Erfindung ein Schaltelement vorgesehen, mit dem der erste Signalpfad oder der zweite Signalpfad unabhängig voneinander mit dem Ausgang gekoppelt werden können oder von dem Ausgang getrennt werden können.

Auf diese Weise wird es sehr einfach möglich, die beiden Phasen in dem Verfahren in der elektronischen Schaltung nachzubilden, d.h. zu implementieren.

Das Spannungswertspeicherelement kann mindestens einen Kondensator aufweisen, womit eine analoge Speicherung des ersten Sensorsignals in dem Speicherelement des ersten Signalpfads auf sehr einfache Weise verlässlich ermöglicht wird.

Alternativ kann das Spannungswertspeicherelement als digitaler Speicher ausgestaltet sein, in dem der von einem Analog-/Digital-Wandler erzeugt digitale Wert des Strom-offsetsignals, d.h. im Wesentlichen des ersten Stromsignals, gespeichert wird. In der zweiten Phase wird in diesem Fall der gespeicherte digitale Wert einem Digital-/Analog-Wandler zugeführt, und es wird in diesem ein dem ersten Sensorssignal im Wesentlichen entsprechendes Signal erzeugt und dem Eingang zur Strom-Offsetkompensation zugeführt.

Der erste Signalpfad weist gemäß einer weiteren Ausgestaltung der Erfindung eine von der Regelungseinheit gesteuerte erste Stromquelle auf, mit der der Offsetstrom in der zweiten Phase zur Strom-Offsetkompensation bereitgestellt wird.

Die Regelungseinheit kann derart eingerichtet sein, dass für den Fall, dass das durch den zweiten Signalpfad geführte Signal einen vorgegebenen Schwellenwert überschreitet, die gesteuerte erste Stromquelle einen dem durch den zweiten Signalpfad geführten Signal entsprechenden Strom erzeugt, der dem Eingang zugeführt werden kann.

Auf diese Weise kann die Einhaltung eines vorgegebenen geeigneten Dynamikbereichs gewährleistet werden, da bei Überschreiten des Schwellenwerts dieses in dem zweiten Signalpfad auftretendes Signal als Strom-Offsetsignal in dem Signalspeicherelement des ersten Signalpfades gespeichert wird und damit anschaulich ein "Rücksetzen" des Dynamikbereichs erreicht wird, wodurch ein fester Dynamikbereich für den Messkanal, d.h. den zweiten Signalpfad, gewährleistet wird.

Die Regelungseinheit kann eine Spannungsquelle aufweisen. in diesem Fall kann die erste gesteuerte Stromquelle eine von der Spannungsquelle spannungsgesteuerte Stromquelle sein.

Die Spannungsquelle selbst kann als spannungsgesteuerte Spannungsquelle ausgestaltet sein, vorzugsweise als differenzspannungsgesteuerte Spannungsquelle.

Gemäß einer weiteren Ausgestaltung der Erfindung ist eine gesteuerte zweite Stromquelle in dem zweiten Signalpfad vorgesehen, welche von einer weiteren Spannungsquelle gesteuert werden kann.

Zwischen dem Ausgang und den Signalpfaden kann eine gesteuerte dritte Stromquelle geschaltet sein, die das Ausgangssignal erzeugt.

Ausführungsbeispiele der Erfindung sind in den Figuren dargestellt und werden im weiteren näher erläutert.

Es zeigen

Figur 1 eine Prinzipskizze, in der das den Ausführungsbeispielen zugrundeliegende Prinzip dargestellt ist;

Figuren 2a und 2b eine Skizze zweier Planarelektroden, mittels derer die Existenz zu erfassender DNA-Stränge in einem Elektrolyt (Figur 2a) bzw. deren Nichtexistenz (Figur 2b) nachgewiesen werden können;

Figur 3 Interdigitalelektroden gemäß dem Stand der Technik.

Figuren 4a bis 4c Skizzen eines Biosensors gemäß dem Stand der Technik, anhand derer einzelne Zustände im Rahmen des Redox-Recycling-Vorgangs erläutert werden;

Figur 5 ein Funktionsverlauf eines Kreisstroms im Rahmen eines Redox-Recycling-Vorgangs;

Figur 6 ein Diagramm, in dem der Signalverlauf in den zwei Phasen, der Strom-Offsetkompensation und der eigentlichen Messphase dargestellt ist;

Figur 7 eine schematische Darstellung unterschiedlicher Dynamikbereiche für das Sensorsignal für zwei verschiedene Messsituationen;

Figur 8 eine schematische Darstellung des "Rücksetzverfahrens" zur Erzielung eines einheitlichen festen Dynamikbereiches für die Sensorsignale aus Figur 7;

Figur 9 ein Prinzipschaltbild einer elektronischen Schaltung gemäß einem Ausführungsbeispiel der Erfindung;

Figur 10 ein Schaltbild einer elektronischen Schaltung gemäß einem ersten Ausführungsbeispiel der Erfindung;

Figur 11 ein Schaltbild einer elektronischen Schaltung gemäß einem zweiten Ausführungsbeispiel der Erfindung;

Figur 12 ein Schaltbild einer elektronischen Schaltung gemäß einem dritten Ausführungsbeispiel der Erfindung;

Figur 13 ein Schaltbild einer elektronischen Schaltung gemäß einem vierten Ausführungsbeispiel der Erfindung; und

Figur 14 eine Skizze einer Sensoranordnung mit einem Sensor und einer elektronischen Schaltung, die in einer integrierten Schaltung realisiert sind.

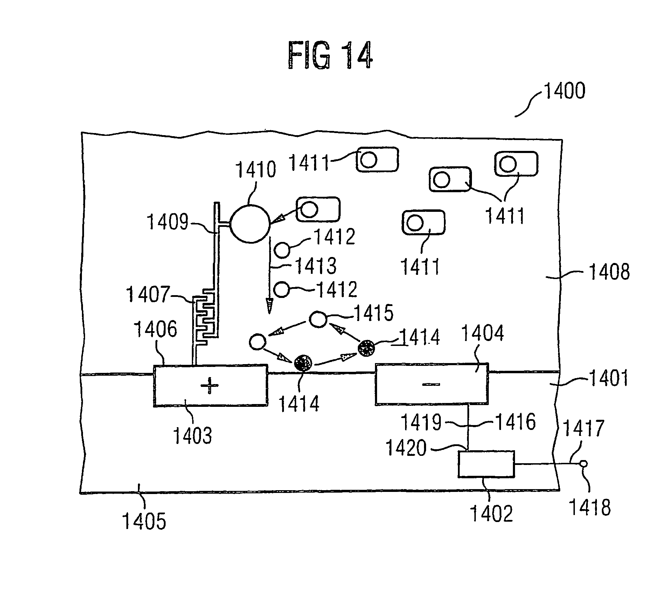

**Fig.14** zeigt eine Sensoranordnung 1400 mit einem Sensor 1401 und einer elektrischen Schaltung 1402, wobei der Sensor 1401 und die elektrische Schaltung 1402 in einer gemeinsamen elektrischen Schaltung in der Sensoranordnung 1400 integriert sind.

Der Sensor 1401 weist im Wesentlichen den Aufbau des in **Fig.4a** bis **Fig.4c** dargestellten Aufbau auf.

Dies bedeutet, dass der Sensor 1401 eine erste Elektrode 1403 sowie eine zweite Elektrode 1404 aufweist, die auf einem Substrat 1405 als Isolatorschicht aufgebracht sind. In das Substrat 1405 ist ferner die elektrische Schaltung 1402 eingebracht.

Auf der ersten Elektrode 1403 aus Gold ist ein Haltebereich, ausgestaltet als Halteschicht 1406, aufgebracht. Der Haltebereich dient zum Immobilisieren von DNA-Sondenmolekülen 1407 auf der ersten Elektrode 1403.

Auf der zweiten Elektrode 1404 ist kein solcher Haltebereich vorgesehen.

**F**ig.14 zeigt die Sensoranordnung 1400 in der Messphase, d.h. in der Phase, in der mittels der Sensoranordnung 1400 DNA-Stränge mit einer Sequenz, die komplementär ist zu der Sequenz der immobilisierten DNA-Sondenmoleküle 1407 erfasst werden sollen.

Der Sensor 1401 wird hierfür mit einer zu untersuchenden Lösung 1408, beispielsweise einem Elektrolyt, in Kontakt gebracht derart, dass in der zu untersuchenden Lösung 1408 eventuell enthaltene DNA-Stränge mit der komplementären Sequenz zu der Sequenz der DNA-Sondenmoleküle 1407 hybridisieren können.

Gemäß dem in **Fig.14** dargestellten Fall sind in der zu untersuchenden Lösung 1408 die zu erfassenden DNA-Stränge 1409 enthalten und schon an den DNA-Sondenmolekülen 1407 immobilisiert.

Die DNA-Stränge 1409 in der zu untersuchenden Lösung 1408 sind mit einem Enzym 1410 markiert, mit welchem Enzym 1410 es möglich ist im Weiteren beschriebene Moleküle in Teilmoleküle zu spalten.

Als Enzym 1410 wird eines der oben genannten Enzyme verwendet.

Üblicherweise ist eine erheblich größere Anzahl von DNA-Sondenmolekülen 1407 vorgesehen, als zu ermittelnde DNA-Stränge 1409 in der zu untersuchenden Lösung 1408 enthalten sind.

Nachdem die in der zu untersuchenden Lösung 1408 eventuell enthaltenen, mit dem Enzym 1410 mit den immobilisierten DNA-Sondenmolekülen 1407 hybridisiert sind, erfolgt eine Spülung des Sensors 1401, der gemäß diesem Ausführungsbeispiel als Biosensor fungiert, wodurch die nicht hybridisierten DNA-Stränge entfernt werden und der Sensor 1401 von der zu untersuchenden Lösung 1408 gereinigt wird.

Dieser zur Spülung verwendeten Spüllösung oder einer in einer weiteren Phase eigens zugeführten weiteren Lösung wird eine elektronisch ungeladene Substanz beigegeben, die Moleküle 1411 enthält, die durch das Enzym 1410 an den hybridisierten DNA-Strängen 1409 gespalten werden können in ein erstes Teilmolekül 1412 mit einer negativen elektrischen Ladung und in ein zweites Teilmolekül (nicht dargestellt) mit einer positiven elektrischen Ladung.

Die aus den durch das Enzym 1410 spaltbaren Moleküle 1411 erzeugten ersten Teilmoleküle 1412, die eine negative elektrische Ladung aufweisen, werden, wie in **Fig.14** gezeigt ist, zu der positiv geladenen Anode, d.h. zu der ersten Elektrode 1403 angezogen, wie durch den Pfeil 1413 symbolisiert ist.

Die negativ geladenen ersten Teilmoleküle 1412 werden an der ersten Elektrode 1403, die als Anode ein positives elektrisches Potential aufweist, oxidiert und werden als oxidierte, elektrisch positiv geladene Teilmoleküle 1414 an die negativ geladene Kathode, d.h. die zweite Elektrode 1404 bewegt, d.h. von dieser angezogen, an welcher zweiten Elektrode 1404 sie wiederum reduziert werden. Die reduzierten Teilmoleküle 1415 werden wiederum zu der ersten Elektrode 1403 bewegt, d.h. zu der Anode.

Auf diese Weise wird ein elektrischer Kreisstrom generiert, der proportional ist zu der Anzahl der jeweils durch die Enzyme 1410 erzeugten elektrischen Ladungsträger.

Wie oben beschrieben wurde, ist der elektronische Parameter, der bei dieser Methode ausgewertet wird, die Änderung des elektrischen Stroms $m = \frac{dI}{dt}$ als Funktion der Zeit t, wie dies in dem Diagramm 500 in **Fig.5** schematisch dargestellt ist.

Der erzeugte Messstrom wird als Sensorsignal 1416 von der zweiten Elektrode 1404 der elektronischen Schaltung 1402, wie sie im Weiteren näher erläutert wird, als zweites Sensorsignal in der eigentlichen Messphase zugeführt.

Die elektrische Schaltung 1402 trennt, wie im Weiteren noch detailliert erläutert wird, den Offsetstrom von dem eigentlichen Messstrom, d.h. von dem zeitlich sich verändernden Messsignal, welches als Ausgangssignal 1417 an einem Ausgang 1418 der elektronischen Schaltung 1402 bereitgestellt wird.

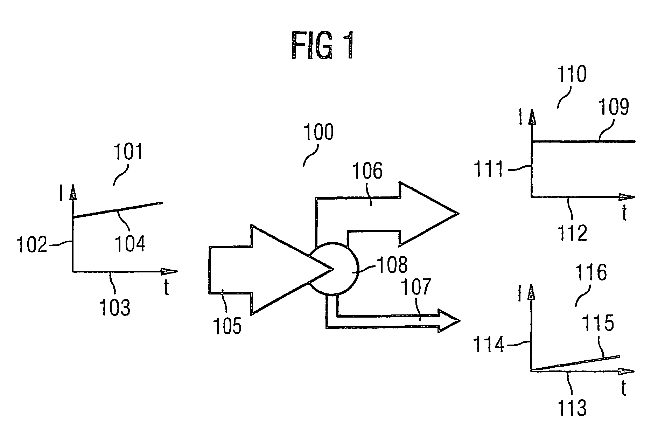

Zur weiteren Veranschaulichung zeigt **Fig.1** eine Prinzipskizze 100 des den weiteren Ausführungsbeispielen der Erfindung zugrundeliegenden Prinzips.

In **Fig.1** ist in der Prinzipskizze 100 ein erstes Diagramm 101 gezeigt, in dem der Verlauf des von dem Sensor 1401 erzeugten Sensorsignals 1416 während des Redox-Recycling-Vorgangs dargestellt ist. Der Verlauf des Stroms I 102 über die Zeit t 103 ergibt einen charakteristischen Sensorsignalverlauf 104, wie in dem ersten Diagramm 101 dargestellt ist.

Dieses zweite Sensorsignal 104 wird über einen Sensorkanal 105, in **Fig.14** beispielsweise über eine elektrische Leitung 1419, von der zweiten Elektrode 1404 an einen Eingang 1420 der elektrischen Schaltung 1402 zugeführt.

Anschaulich kann das Prinzip darin gesehen werden, dass das einen Strom-Offsetanteil und einen Messsignalanteil enthaltende Sensorsignal 104, welches der elektronischen Schaltung 1402 über den Sensorkanal 105 zugeführt wird, in einen Strom-Offsetanteil und einen Messsignalanteil aufgeteilt wird, wobei der Strom-Offsetanteil als Offsetstrom über einen Offsetkanal 106 geführt wird und der Messsignalanteil als eigentlicher Messstrom über einen Messkanal 107, d.h. es erfolgt eine Aufteilung des zweiten Sensorsignals 104, 1416 an einem Knoten 108.

Ein erster Teil ist ein zeitunabhängiges Signal, der Offsetstrom 109, dessen Verlauf in einem zweiten Diagramm 110 in **Fig.1** als Verlauf des Stroms I 111 als Funktion der Zeit t 112 dargestellt ist. Unter einem zeitunabhängigen Signal ist im Weiteren ein Signal zu verstehen, welches zeitlich nicht veränderlich ist oder dessen Signalwert zu einem vorgegebenen Zeitpunkt ermittelt wird und der ermittelte Signalwert für eine vorgegebene Zeitdauer als ein konstanter Signalwert verwendet wird.

Über den Messkanal 107 wird der zeitabhängige Anteil des zweiten Sensorsignals 1416 als ein zweiter Teil geführt, d.h. der Messstrom, der über den Messkanal 107 geführt wird, ist ein zeitlich sich verändernder Stromverlauf, im Bereich des Redox-Recycling-Vorgangs ein linear sich über die Zeit t 113 verändernder Strom I 114, wie er als Messstromverlauf 115 in einem dritten Diagramm 116 in **Fig.1** dargestellt ist.

Somit wird anschaulich ein erster Signalpfad als Strompfad zum Abführen des Offsetstroms verwendet, während in einem zweiten Signalpfad, d.h. in einem zweiten Strompfad, das verbleibende Differenzsignal abgeleitet wird und als Messstrom weiterverarbeitet wird.

Gemäß den Ausführungsbeispielen der Erfindung wird der gesamte Messvorgang in zwei Phasen aufgeteilt, wie sie in **Fig.6** in einem Zeitdiagramm 600 dargestellt sind.

Das Zeitdiagramm 600 zeigt den Verlauf eines Sensorstroms $I_{Sensor}$ 601 über die Zeit t 607, der sich ergibt als Summe des Offsetstroms $I_{Offset}$ und des Messstroms $I_{Mess}$, wobei der Offsetstrom $I_{Offset}$ im Wesentlichen zeitunabhängig und der Messstrom $I_{Mess}$ zeitabhängig ist.

In einer ersten Phase 602 erfolgt eine Strom-Offsetkompensation des Offsetstroms $I_{Offset}$.

Die erste Phase 602 dauert von einem ersten Zeitpunkt t = 0 bis zu einem Umschaltzeitpunkt t* 603, zu dem die eigentliche Messphase 604 zur Ermittlung des zeitabhängigen Verlaufs des Messstroms 115 beginnt.

In der ersten Phase 602 wird von dem Sensor 1401 ein elektrischer Strom erzeugt, dessen zeitlicher Verlauf noch keine auswertbare Information über das jeweils nachzuweisende makromolekulare Biopolymer, beispielsweise den nachzuweisenden DNA-Strang enthält.

Dies bedeutet, dass in der ersten Phase 602 noch kein Redox-Recycling-Vorgang gestartet wird bzw. nur ein Einschwingvorgang des Redox-Recycling-Vorgang durchgeführt wird.

Mit Hilfe der im Weiteren im Detail erläuterten elektronischen Schaltung 1402 wird der von dem Sensor 1401 erzeugte elektrische Strom als erstes Sensorsignal registriert und es wird auf eine im Weiteren im Detail erläuterte Weise ein im Wesentlichen vollständiger Abfluss des ersten Sensorsignals in den dafür vorgesehenen Offsetkanal 106 mittels einer geeigneten Regelung "erzwungen".

Das erste Sensorsignal weist im Wesentlichen ausschließlich den Strom-Offsetanteil, d.h. den Offsetstrom $I_{Offset}$ auf, welcher von dem Sensor 1401 generiert wird.

Nach erfolgter Strom-Offsetkompensation in der ersten Phase 602 wird das oben beschriebene Redox-Recycling-Verfahren gestartet, in **Fig.6** symbolisiert durch einen Pfeil 605.

Nach dem Beginn des Redox-Recycling-Verfahrens stellt sich nach einer Einlaufphase 606 der linear mit der Zeit t 607 ansteigende elektrische Strom ein.

Zu diesem Zeitpunkt wird der Zustand des Offsetkanals 106 "eingefroren", d.h. der Wert des Offsetstroms $I_{Offset}$ wird in der elektronischen Schaltung 1402, wie im Weiteren noch detailliert erläutert wird, in geeigneter Weise gespeichert.

In der zweiten Phase 604, der eigentlichen Messphase, in der eine Erfassung makromolekularer Biopolymere stattfindet, wird jeder nach dem Ende der Strom-Offsetkompensation, d.h. der ersten Phase 602, durch das Redox-Recycling-Verfahren generierte zusätzliche Strombeitrag in den Messkanal 107 geführt und kann dort ohne den üblicherweise erheblich störenden Strom-Offsetanteil, d.h. ohne den Offsetstrom $I_{Offset}$ weiterverarbeitet werden.

Ein erheblicher Vorteil bei der gemäß diesem Ausführungsbeispiel dargestellten On-Chip-Lösung, bei der sowohl der Sensor 1401 als auch die elektronische Schaltung 1402 in der Sensoranordnung 1400 in einem Chip integriert realisiert sind, ist darin zu sehen, dass bereits unmittelbar an dem Sensor 1401 der interessierende Signalanteil, d.h. der Messstrom 115 aus dem erzeugten zweiten Sensorsignal herausgefiltert werden kann.

Eine Verstärkung dieses Signalanteils, d.h. des Messstroms, kann somit unabhängig von den Einschränkungen gemäß dem Stand der Technik, die sich aus dem sehr großen Strom-Offsetanteil ergeben würden, in dem Messkanal 107 erfolgen.

Gemäß den Ausführungsbeispielen ist es vorgesehen, mit Hilfe des Offsetkanals 106 den Messkanal 107 wiederholt rücksetzen zu können, d.h. auf einen vorgegebenen Wert, um die den Offsetkanal 106 wieder neu zu initialisieren.

Wie oben dargestellt worden ist, kann der in **Fig.7** dargestellte Unterschied im Dynamikbereich zweier Sensorsignale 701, 702, wie er in dem Diagramm 700 dargestellt ist, problematisch sein für die gewünschte Sensorsignalauswertung, d.h. beim Erfassen des Messstroms aus dem Sensorstrom 703 $I_{Sensor}$ als Funktion der Zeit t 704.

Wie oben dargestellt wurde, ergeben sich bei unterschiedlichen DNA-Sequenzen der zu erfassenden DNA-Stränge oftmals erheblich unterschiedliche Dynamikbereiche, beispielsweise für das erste Signal $I_1$ 702 ein erster Dynamikbereich 705, sowie für ein zweites Signal $I_2$ ein zweiter Dynamikbereich 706.

Gemäß dieser Ausgestaltung der Erfindung ist es vorgesehen, während des Redox-Recycling-Verfahrens bei Überschreiten eines vorgegebenen Schwellenwerts, d.h. einem vorgegebenen Schwellstrom $I_S$ 801, wie in einem Diagramm 800 in **Fig.8** dargestellt ist, in dem Messkanal 107 zu erzwingen, dass der durch den Messkanal 107 jeweils fließende Messstrom $I_{Mess}$ 802 als Funktion der Zeit t 803 aufgrund des Überschreitens des Schwellenwerts $I_S$ 801 vollständig in den Offsetkanal 106 abfließt und danach als neuer Offsetwert für die Strom-Offsetkompensation als neuer Offsetstrom $I_{Offset}$ abgespeichert wird.

Bei dieser Vorgehensweise wird das in **Fig.8** dargestellte Rücksetzen gewährleistet und damit ein sägezahnförmiger Verlauf des jeweiligen Stromsignals 701, 702 in dem Messkanal 107 erzeugt.

Auf diese Weise wird ein fester, durch den Schwellenstrom $I_S$ 801 definierter Dynamikbereich 804 vorgegeben.

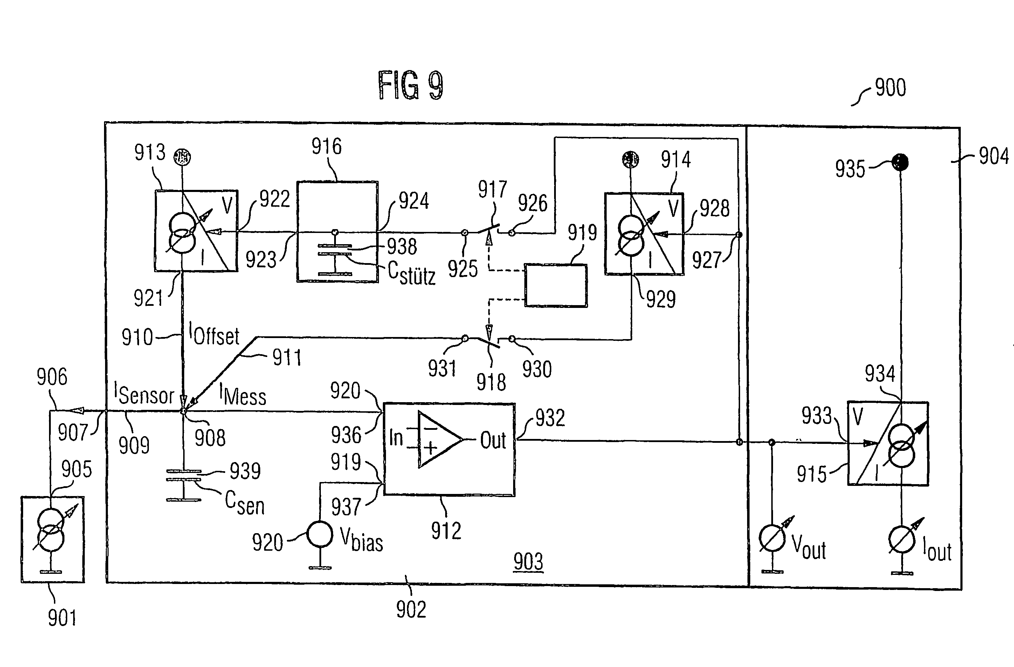

**Fig.9** zeigt ein Prinzipschaltbild einer Sensoranordnung 900 gemäß einem Ausführungsbeispiel der Erfindung mit weiteren Details.

In **Fig.9** sind der Sensor 901 sowie die elektronische Schaltung 902 dargestellt.

Die elektronische Schaltung 902 ist gemäß diesem Ausführungsbeispiel aufgeteilt in einen Regelungsteil 903 und einen Ausgangsteil 904.

Der Sensor 901 ist über dessen Ausgang 905 und eine elektrische Leitung 906 mit einem Eingang 907 der elektronischen Schaltung 902 elektrisch gekoppelt.

Über die elektrische Kopplung wird das jeweilige Sensorsignal, das oben beschriebene erste Sensorsignal oder das zweite Sensorsignal als Sensorstrom $I_{Sensor}$ der elektronischen Schaltung 902, insbesondere einem ersten Knoten 908 zugeführt.

Der erste Knoten 908 ist mit dem Eingang 907 der elektronischen Schaltung 902 gekoppelt, welche elektrische Verbindung den Sensorkanal 909 bildet, sowie mit dem Offsetkanal 910 und dem Messkanal 911.

Idealisiert ist der Stromfluss des Sensorstroms $I_{Sensor}$, des Offsetstroms $I_{Offset}$ sowie des Messstroms $I_{Mess}$ in **Fig.9** dargestellt.

Weiterhin sind als Ausgangssignale ein Ausgangsstrom $I_{Out}$ sowie eine Ausgangsspannung $V_{Out}$ dargestellt.

Die elektronische Schaltung 902 weist in ihrem Regelungsteil 903 eine differenzspannungsgesteuerte Spannungsquelle 912 auf, sowie eine erste spannungsgesteuerte Stromquelle 913, eine zweite spannungsgesteuerte Stromquelle 914 und eine dritte spannungsgesteuerte Stromquelle 915.

Weiterhin ist ein Spannungswertspeicher 916 vorgesehen.

Ein erster Schalter 917 ist in den Offsetkanal, d.h. in den ersten Strompfad 910 eingebracht sowie ein zweiter Schalter 918 in den Messkanal 911, d.h. in den zweiten Strompfad.

Die beiden Schalter 917, 918 werden von einer Steuereinheit 919 angesteuert derart, dass sie unabhängig voneinander eingeschaltet oder ausgeschaltet werden können.

Der Regelungsteil 903 kann in Abhängigkeit von der durch die Steuereinheit 919 kontrollierten Schalterstellungen der Schalter 917, 918 in zwei Betriebsmodi betrieben werden, die im Weiteren noch näher erläutert werden.

Die differenzspannungsgesteuerte Spannungsquelle 912 ist über ihren ersten Eingang 937 mit einer eine Bias-Spannung $V_{bias}$ bereitstellende Spannungsquelle 920 gekoppelt und darüber mit dem Massepotential.

Ein zweiter Eingang 936 der differenzspannungsgesteuerten Spannungsquelle 912 ist mit dem ersten Knoten 908 der elektronischen Schaltung 902 gekoppelt.

Ein erster Anschluss 921 der ersten gesteuerten Stromquelle 913 ist mit dem ersten Knoten 908 gekoppelt und ein zweiter Anschluss 922 der ersten spannungsgesteuerten Stromquelle 913 ist mit dem Spannungswertspeicher 916 über dessen ersten Anschluss 923 gekoppelt.

Ein zweiter Anschluss 924 des Spannungswertspeichers 916 ist mit einem ersten Anschluss 925 des ersten Schalters 917 gekoppelt und ein zweiter Anschluss 926 des ersten Schalters 917 ist mit einem zweiten Knoten 927 gekoppelt, der wiederum mit einem ersten Anschluss 928 der zweiten spannungsgesteuerten Stromquelle 914 gekoppelt ist.

Ein zweiter Anschluss 929 der zweiten spannungsgesteuerten Stromquelle 914 ist ferner mit einem ersten Anschluss 930 des zweiten Schalters 918 verbunden, dessen zweiter Anschluss 931 mit dem ersten Knoten 908 verbunden ist, womit der Messkanal, d.h. der zweite Strompfad gebildet wird.

Weiterhin ist der Ausgang 932 der differenzspannungsgesteuerten Spannungsquelle 912 mit dem zweiten Knoten 927 gekoppelt sowie mit einem ersten Anschluss 933 der dritten spannungsgesteuerten Stromquelle 915, deren zweiter Anschluss 934 mit dem Ausgang 935 der elektronischen Schaltung 902 in dem Ausgangsteil 904 gekoppelt ist.

In einem ersten Betriebsmodus ist die Schalterstellung des ersten Schalters 917 geschlossen und der zweite Schalter 918 ist offen.

In diesem Zustand bewirkt die elektronische Schaltung 902 die in der ersten Phase 602, d.h. in der Phase der Strom-offsetkompensation beschriebene Kompensation des Offsetstroms $I_{Offset}$, der im Wesentlichen durch das erste Sensorsignal, wie oben erläutert, gebildet wird.

In anderen Worten ausgedrückt bedeutet dies, dass der an der zweiten Elektrode 1404 abgegriffene Sensorstrom $I_{Sensor}$ in der ersten Phase vollständig in den Offsetkanal 106, 910 geführt wird.

Realisiert wird dieser Zustand mit einem Regelkreis, der aus der differenzspannungsgesteuerten Spannungsquelle 912 und der ersten spannungsgesteuerten Stromquelle 913 gebildet wird.

Mit Hilfe des Spannungswertspeichers 916 wird der zu der ersten spannungsgesteuerten Stromquelle 913 korrespondierende Eingangsspannungswert gespeichert, d.h. gesichert.

In **Fig.9** ist der Spannungswertspeicher 16 als ein Analogspeicher realisiert, symbolisiert mittels einer Kapazität 938.

Es ist in diesem Zusammenhang darauf hinzuweisen, dass die Abspeicherung des entsprechenden Spannungswerts und damit des Offsetstroms $I_{Offset}$ auch digital erfolgen kann.

Der jeweilige spezifische Spannungswert kann beispielsweise alternativ mittels eines Analog-/Digital-Konverters umgewandelt werden, digital gespeichert werden und mit einem Digital-/Analog-Wandler in ein analoges Spannungssignal bzw. das korrespondierende Stromsignal, das wiederum im Wesentlichen dem Offsetstrom $I_{Offset}$ entspricht, zurückgewandelt werden.

In einem zweiten Betriebsmodus der in **Fig.9** dargestellten elektronischen Schaltung 902 ist der erste Schalter 917 geöffnet und der zweite Schalter 918 geschlossen.

In diesem Zustand bewirkt die elektronische Schaltung 902 eine Aufspaltung des an dem Sensor 901 abgegriffenen Sensorstroms $I_{Sensor}$ in die beiden Stromanteile des Offsetstroms $I_{Offset}$ und des Messstroms $I_{Mess}$.

Der Wert des Offsetstroms $I_{Offset}$ wird in diesem Zusammenhang aus dem in dem Spannungswertspeicher 916 zum Umschaltzeitpunkt t * 603 (vgl. **Fig.6**) gespeicherten Spannungswert bestimmt.

In dem Messkanal 107 fließt entsprechend der Knotenregel gemäß Kirchhoff der folgende elektrische Strom:

$$I_{Mess} = I_{Sensor} - I_{Offset}. \qquad (1)$$

Der Messkanal 911 ist Bestandteil des Regelkreises, der aus der differenzspannungsgesteuerten Spannungsquelle 912 und der zweiten spannungsgesteuerten Stromquelle 914 gebildet wird.

Der Spannungswert der Ausgangsspannung $V_{Out}$ und des Messstroms $I_{Mess}$ sind somit über die Charakteristik der zweiten spannungsgesteuerten Stromquelle 914 miteinander verknüpft.

Werden die Charakteristika der zweiten spannungsgesteuerten Stromquelle 914 und der dritten spannungsgesteuerten Stromquelle 915 im Wesentlichen identisch zueinander realisiert bzw. werden zwei identische spannungsgesteuerte Stromquellen 914, 915 verwendet, so wird in dem Ausgangsteil 904 der elektronischen Schaltung 902 der Spannungswert der Ausgangsspannung $V_{Out}$ derart in den Ausgangsstrom $I_{Out}$ umgewandelt, dass gilt:

$$I_{Out} = I_{Mess}. \qquad (2)$$

Der Ausgangsstrom $I_{Out}$ enthält somit im Wesentlichen nur das Nutzsignal des Sensors 901, d.h. den zeitabhängigen Messstrom $I_{Mess}$, der das zeitabhängige Verhalten während des Redox-Recycling-Vorgangs beschreibt und somit den Rückschluss auf die entsprechende Hybridisierung der DNA-Stränge mit den DNA-Sondenmolekülen 1407 auf dem Sensor 901 repräsentiert.

Die Bias-Spannungsquelle 920 hat insbesondere folgende, im Weiteren näher erläuterte Funktion.

Sobald einer der oben beschriebenen Regelkreise geschlossen ist, stellt sich an dem ersten Knoten 908 bzw. an einer Kapazität dieses Knotens, symbolisiert durch einen Kondensator $C_{Sen}$ 939 der Spannungswert der Bias-Spannung $V_{bias}$ ein und die zweite Elektrode 1404 erhält damit das für das Redox-Recycling-Verfahren benötigte elektrische Potential.

Ein Problem kann sich beim Umschalten zwischen den beiden oben dargestellten Betriebsmodi ergeben, wenn keiner der beiden Schalter 917, 918 geschlossen ist.

Die Elektrodenspannung an der zweiten Elektrode 1404 des Sensors 1401 kann in diesem Fall grundsätzlich von dem gewünschten Spannungswert wegdriften.

Zur Vermeidung eines solchen Problems ist es sinnvoll, ein geeignetes Timing für den Umschaltvorgang der Schalter 917, 918 vorzusehen oder zusätzliche Schaltungsmaßnahmen zu ergreifen, wie sie bei den weiter unten beschriebenen detaillierten Ausführungsbeispielen der elektrischen Schaltung 902 vorgesehen sind.

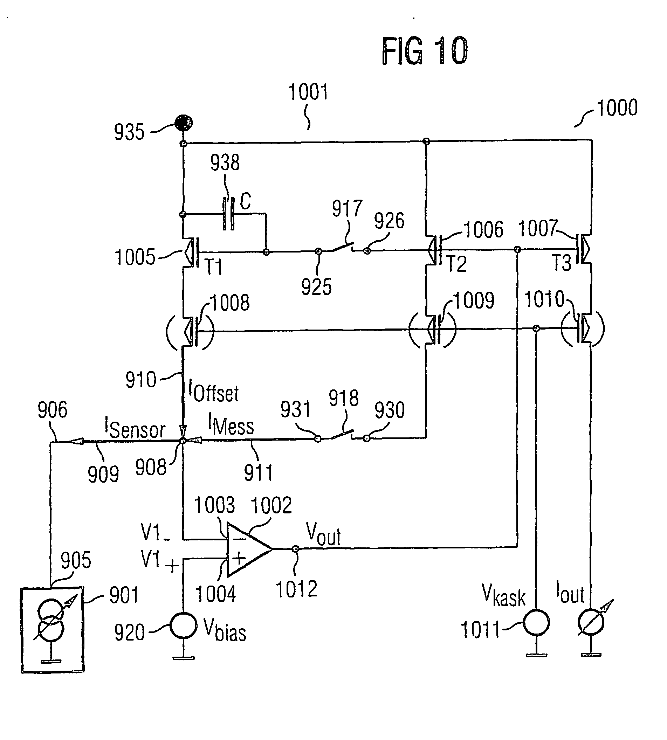

**Fig.10** zeigt eine elektronische Schaltung 1000 gemäß einem ersten Ausführungsbeispiel der Erfindung.

Gleiche Strukturelemente mit gleicher Funktionalität der in **Fig.9** im Prinzip dargestellten elektronischen Schaltung 902 und des Sensors 901 werden bei der Sensoranordnung 1000 gemäß dem ersten Ausführungsbeispiel mit gleichen Bezugszeichen versehen.

Die elektronische Schaltung 1001 weist als differenzspannungsgesteuerte Spannungsquelle einen Operationsverstärker 1002 auf, dessen invertierender Eingang (negativer Eingang) 1003 mit dem ersten Knoten 908 und dessen nicht-invertierender Eingang (positiver Eingang) 1004 mit der Bias-Spannungsquelle 920 gekoppelt ist.

Die spannungsgesteuerten Stromquellen der elektronischen Schaltung 902 sind gemäß diesem Ausführungsbeispiel sowie der weiteren Ausführungsbeispiele realisiert mittels PMOS-Transistoren, die erste spannungsgesteuerte Stromquelle 913 mittels eines ersten Transistors 1005, die zweite spannungsgesteuerte Stromquelle 914 mittels eines zweiten Transistors 1006 sowie die dritte spannungsgesteuerte Stromquelle 915 mittels eines dritten Transistors 1007.

Alternativ können selbstverständlich andere Arten von Transistoren, beispielsweise CMOS-Transistoren, BiCMOS-Transistoren, Bipolartransistoren, etc. eingesetzt werden.

Optional können die in Klammern dargestellten zusätzlichen, mit den jeweiligen Transistoren 1005, 1006, 1007 jeweils in Serie geschalteten weiteren PMOS-Transistoren 1008, 1009, 1010 vorgesehen sein, wobei die weiteren Transistoren 1008, 1009, 1010 als Kaskade dienen und mit einer von einer Kaskaden-Spannungsquelle 1011 bereitgestellten Kaskaden-Spannung $V_{kask}$ geschaltet sind.

Durch die weiteren Transistoren 1008, 1009, 1010 wird die Stromquellencharakteristik der Transistoren 1005, 1006, 1007 verbessert. Anders ausgedrückt bedeutet dies, dass der Ausgangswiderstand der spannungsgesteuerten Stromquellen erhöht wird.

In allen Ausführungsbeispielen, wie sie in **Fig.10, Fig.11, Fig.12, Fig.13** dargestellt sind, ist jeweils der Drain-Anschluss der Transistoren 1005, 1006, 1007 miteinander und mit dem Ausgang 935 der elektronischen Schaltung 1001, 1101, 1201, 1301 verbunden.

Die Funktion der elektronischen Schaltung 1001 und somit der Sensoranordnung 1000 gemäß dem ersten Ausführungsbeispiel wird im Weiteren anhand einiger Rechnungen analytisch beschrieben.

Mit A1 wird die Open-Loop-Verstärkung des Operationsverstärkers 1002 bezeichnet.

Solange durch eine Rückkopplung gewährleistet wird, dass der Operationsverstärker 1002 nicht in seinem Grenzbereich betrieben wird, gilt:

$$V_{Out} = A1\ (V_+ - V_-); \qquad (3)$$

$$V_{Out} = A1\ (V_{bias} - V_-); \qquad (4)$$

$$V_- = V_{bias} - V_{Out} / A1; \qquad (5)$$

$$A1 \rightarrow \infty : \Rightarrow V_- = V_{bias}. \qquad (6)$$

Unabhängig von der Betriebsart des Regelungsteils 903, gebildet durch die entsprechenden Transistoren sowie die Regelsteuereinheit 919 und den Operationsverstärker 1002 stellt sich somit bei Existenz eine Rückkopplung des Operationsverstärkerausgangs 1012, gemäß diesem Ausführungsbeispiels über den ersten Transistor 1005 oder den zweiten Transistor 1006 auf seinen invertierenden Eingang 1003, an der zweiten Elektrode 1404 des Sensors 1401, 901, der gewünschte Bias-Spannungswert $V_{bias}$ ein, sobald die Open-Loop-Verstärkung A1 ausreichend groß ist.

In den folgenden Berechnungen werden die oben beschriebenen zwei Betriebsmodi unterschieden.

In dem ersten Betriebsmodus der Strom-Offsetkompensation, d.h. während der ersten Phase, ist der erste Schalter 917 geschlossen und der zweite Schalter 918 ist geöffnet.

Unter Verwendung eines einfachen Transistormodells für den Sättigungsfall, wie er beispielsweise in [9] beschrieben ist, lässt sich der Offsetstrom $I_{Offset}$ durch den ersten Transistor 1005 gemäß folgender Vorschrift beschreiben:

$$I_{Offset} = k1([V_{dd} - V_{Out}] - |V_{thP1}|)^2, \qquad (7)$$

wobei mit

- $V_{dd}$ die Versorgungsspannung,
- $V_{thp1}$ die Einsatzspannung des ersten Transistors 1005,
- k1 eine technologiespezifische und von der Transistorgeometrie abhängige Konstante für den ersten Transistor 1005,

bezeichnet wird.

Wird die obige Vorschrift (7) nach der Ausgangsspannung $V_{Out}$ aufgelöst, so erhält man einen Zusammenhang zwischen dem in dem Spannungswertspeicher 916 gespeicherten Spannungswert $V_{Speicher}$ und dem in dem Offsetkanal 910 abgeführten Strom $I_{Offset}$ gemäß folgender Vorschrift:

$$V_{Speicher} = V_{dd} - |V_{thp1}| - \sqrt{\frac{I_{Offset}}{k1}}. \qquad (8)$$

Gemäß dem zweiten Betriebsmodus, in dem der erste Schalter 917 geöffnet ist und der zweite Schalter 918 geschlossen ist, werden die Verhältnisse an dem zweiten Transistor 1006 mit dem gleichen, oben dargestellten Transistormodell beschrieben und es ergibt sich:

$$I_{mess} = I_{Sen} - I_{Offset} = k2 \cdot \left(V_{dd} - V_{Out} - |V_{thp2}|\right)^2. \qquad (9)$$

$$\Rightarrow V_{Out} = V_{dd} - |V_{thp2}| - \sqrt{\frac{\left(I_{Sen} - I_{Offset}\right)}{k2}}$$

wobei mit $V_{thp2}$ die Einsatzspannung des zweiten Transistors 1006 bezeichnet wird.

Ferner ergibt sich in dem Ausgangsteil 904 der elektronischen Schaltung 1001:

$$I_{Out} = k3\left(V_{dd} - V_{Out} - |V_{thp3}|\right)^2$$

$$= k3\left(V_{dd} - V_{dd} + |V_{thp2}| + \sqrt{\frac{\left(I_{Sen} - I_{Offset}\right)}{k2}} - |V_{thp3}|\right)^2,$$

$$(10)$$

wobei mit $V_{thp3}$ die Einsatzspannung des dritten Transistors 1007 bezeichnet wird.

Unter der Voraussetzung, dass gilt:

$$V_{thp2} = V_{thp3}, \qquad (11)$$

ergibt sich:

$$I_{Out} = \frac{k3}{k2} \cdot \left(I_{Sen} - I_{Offset}\right). \qquad (12)$$

Da der Sensorstrom $I_{Sensor}$ gemäß **Fig.5** sich ergibt gemäß folgender Vorschrift:

$$I_{Sensor} = I_{Offset} + m \cdot t, \qquad (13)$$

ergibt sich:

$$I_{Out} = \frac{k3}{k2} \cdot m \cdot t. \qquad (14)$$

Der Ausgangsstrom $I_{Out}$ enthält den für die Analytik des Redox-Recycling-Verfahrens charakteristischen Parameter m, der den entsprechenden Informationsgehalt hinsichtlich des zu erfassenden DNA-Strangs in der zu untersuchenden Lösung enthält.

Der Vorfaktor $\frac{k3}{k2}$ kann durch die Geometrie des zweiten Transistors 1006 und des dritten Transistors 1007 von dem Schaltungsdesigner entsprechend eingestellt und damit vorgegeben werden.

Der Vorfaktor $\frac{k3}{k2}$ kann damit beispielsweise auch als Verstärkungsfaktor verwendet werden.

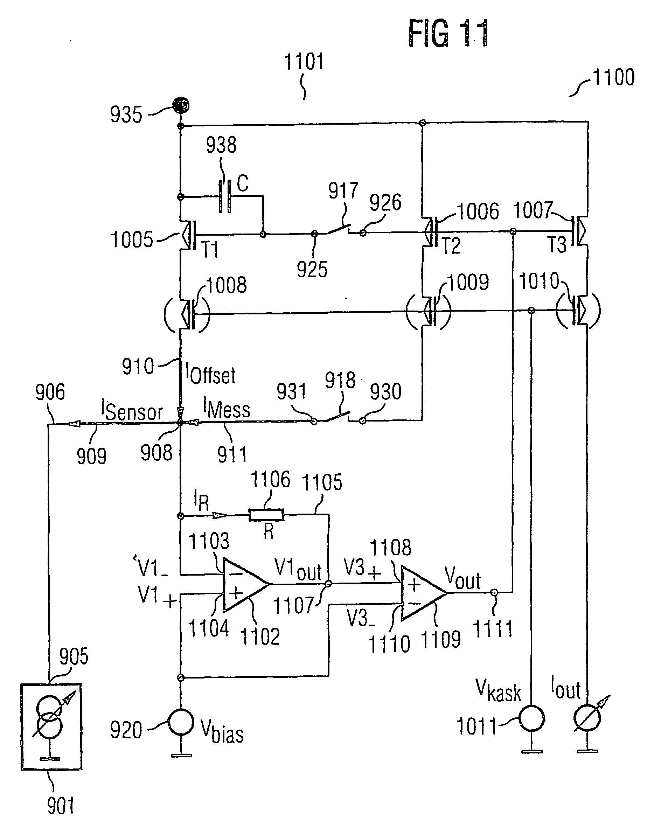

**Fig.11** zeigt eine Sensoranordnung 1100 gemäß einem zweiten Ausführungsbeispiel der Erfindung.

Gleiche Strukturelemente mit gleicher Funktionalität der in **Fig.9** und **Fig.10** dargestellten elektronischen Schaltung 902 und des Sensors 901 werden bei der Sensoranordnung 1100 gemäß dem zweiten Ausführungsbeispiel mit gleichen Bezugszeichen versehen.

Die elektronische Schaltung 1101 gemäß dem zweiten Ausführungsbeispiel unterscheidet sich von der elektronischen Schaltung 1001 gemäß dem ersten Ausführungsbeispiel insbesondere durch einen zusätzlichen Operationsverstärker, im Weiteren als zweiter Operationsverstärker 1102 bezeichnet, dessen invertierender Eingang 1103 mit dem ersten Knoten 908 und dessen nicht invertierender Eingang 1104 mit der Bias-Spannungsquelle 920 gekoppelt ist.

Weiterhin ist in dem Rückkopplungszweig 1105 des zweiten Operationsverstärkers 1102 ein elektrischer Widerstand 1106 vorgesehen.

Der Ausgang 1107 des zweiten Operationsverstärkers ist mit dem nicht-invertierenden Eingang 1108 des ersten Operationsverstärkers 1109 gekoppelt und der nicht-invertierende Eingang 1104 des zweiten Operationsverstärkers 1102 ist mit dem invertierenden Eingang 1110 des ersten Operationsverstärkers 1109 gekoppelt.

Der Ausgang 1111 des ersten Operationsverstärkers 1109 ist wiederum mit den Gate-Anschlüssen des zweiten Transistors 1006 und des dritten Transistors 1007 gekoppelt.

Mittels des zusätzlichen zweiten Operationsverstärkers 1102 und dem Rückkopplungswiderstand 1106 wird erreicht, dass unabhängig von der Position der Schalter 917, 918 die zweite Elektrode 1404 des Sensors 1401, 905 mit der benötigten gewünschten Bias-Spannung $V_{bias}$ beschaltet ist, d.h. dass folgende Vorschriften gelten:

$$V_{1Out} = A1 (V_{1+} - V_{1-}); \tag{15}$$

$$V_{1Out} = A1 (V_{bias} - V_{1-}); \tag{16}$$

$$\Rightarrow V_{1-} = V_{bias} - V_{1Out} / A1; \tag{17}$$

$$A1 \rightarrow \infty \Rightarrow V_- = V_{bias}. \tag{18}$$

Die elektronische Schaltung 1101 funktioniert darüber hinaus genauso wie die elektronische Schaltung 1001 gemäß dem ersten Ausführungsbeispiel, sobald der Strom $I_R$ durch den Rückkopplungswiderstand 1106 verschwindet.

Zur Berechnung des Spannungsabfalls über den Rückkopplungswiderstand 1106 muss die Spannung $V_{3+}$ an dem nicht-invertierenden Eingang 1110 des ersten Operationsverstärkers 1109 bekannt sein.

Sobald der Gesamtregelkreis mit dem ersten Operationsverstärker 1109 durch Schließen einer der beiden Schalter 917, 918 rückgekoppelt ist und der Ausgang, d.h. die Ausgangsspannung $V_{Out}$ nicht in den Sättigungsbereich der Operationsverstärker 1102, 1109 gerät, gelten folgende Vorschriften:

$$V_{Out} = A3 (V_{3+} - V_{3-}); \tag{19}$$

$$V_{Out} = A3 (V_{3+} - V_{bias}); \tag{20}$$

$$\Rightarrow V_{3+} = V_{bias} + V_{Out} / A3; \tag{21}$$

$$A3 \rightarrow \infty \Rightarrow V_{3+} = V_{bias}. \tag{22}$$

Der Abfall der elektrischen Spannung über dem Rückkopplungswiderstand 1106 ist somit gleich Null und folglich ist auch der Strom $I_R$ durch den Rückkopplungswiderstand 1106 gleich Null, wie für die Funktion der elektronischen Schaltung 1101 gemäß dem zweiten Ausführungsbeispiel erforderlich, wenn einer der Schalter 917, 918 in geschlossenem Zustand ist.

Gemäß dem ersten Ausführungsbeispiel und dem zweiten Ausführungsbeispiel kommt die interessierende Größe des Stromgradientenanstiegs m linear in der Vorschrift zur Ermittlung des Ausgangsstroms $I_{Out}$ vor aber nicht-linear in der Vorschrift zur Ermittlung der Ausgangsspannung $V_{Out}$.

Gemäß dem im Folgenden beschriebenen dritten Ausführungsbeispiel und dem im Folgenden beschriebenen vierten Ausführungsbeispiel ist der Stromgradientenanstieg m in beiden Ausgangsgrößen $I_{Out}$ und $V_{Out}$ in linearer Form enthalten.

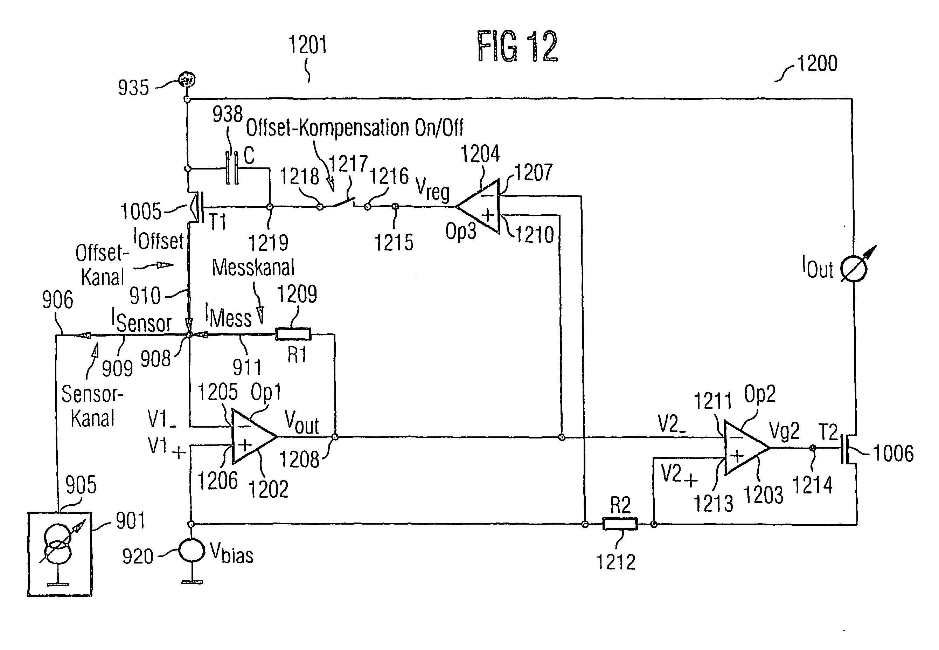

Bei der Berechnung der Funktion der in **Fig.12** dargestellten elektronischen Schaltung 1201 werden wiederum die Betriebsmodi der Offsetkompensation und der eigentlichen Messphase unterschieden.

**Fig.12** zeigt eine Sensoranordnung 1200 gemäß einem dritten Ausführungsbeispiel der Erfindung.

Gleiche Strukturelemente mit gleicher Funktionalität der in **Fig.9, Fig.10** und **Fig.11** dargestellten elektronischen Schaltung 902 und des Sensors 901 werden bei der Sensoranordnung 1200 gemäß dem dritten Ausführungsbeispiel mit gleichen Bezugszeichen versehen.

Die elektronische Schaltung 1201 gemäß dem dritten Ausführungsbeispiel weist einen dritten Operationsverstärker 1202, einen vierten Operationsverstärker 1203 sowie einen fünften Operationsverstärker 1204 auf.

Der invertierende Eingang 1205 des dritten Operationsverstärkers ist mit dem ersten Knoten 908 gekoppelt und der nicht-invertierende Eingang 1206 ist mit der Bias-Spannungsquelle 929 gekoppelt sowie mit dem invertierenden Eingang 1207 des fünften Operationsverstärkers 1204.

Weiterhin ist der Ausgang 1208 des dritten Operationsverstärkers 1202 über den ersten elektrischen Widerstand 1209 zu dem ersten Knoten 908 rückgekoppelt und ferner mit dem nicht-invertierenden Eingang 1210 des fünften Operationsverstärkers 1204 gekoppelt sowie mit dem invertierenden Eingang 1211 des vierten Operationsverstärkers 1203.

Weiterhin ist der nicht-invertierende Eingang 1206 des dritten Operationsverstärkers 1202 über einen zweiten elektrischen Widerstand 1212 mit dem nicht-invertierenden Eingang 1213 des vierten Operationsverstärkers 1203 gekoppelt.

Der Ausgang 1214 des vierten Operationsverstärkers 1203 ist mit dem Gate-Anschluss des zweiten Transistors 1006 gekoppelt und der Ausgang 1215 des fünften Operationsverstärkers ist mit einem ersten Anschluss 1216 eines Schalters 1217 gekoppelt, dessen zweiter Anschluss 1218 mit dem Gate-Anschluss 1219 des ersten Transistors 1005 gekoppelt ist sowie über einen Kondensator 938 mit dem Drain-Anschluss des ersten Transistors 1005 und dem Ausgang 935 der elektronischen Schaltung 1201.

Somit enthält die elektronische Schaltung gemäß dem dritten Ausführungsbeispiel lediglich einen Schalter 1217.

Die Ausgangsspannung $V_{Out}$ lässt sich gemäß folgenden Vorschriften berechnen:

$$V_{Out} = A1 \, (V_{1+} - V_{1-}); \tag{23}$$

$$V_{Out} = A1 \, (V_{bias} - V_{Out} - I_{Mess} \, R1); \tag{24}$$

$$\Rightarrow V_{Out} = A1/(1+A1) \, (V_{bias} - I_{Mess} \, R1). \tag{25}$$

Für eine Regelungsspannung $V_{Reg}$, die bei geschlossenem Schalter 1217 identisch ist mit der Spannung, die an dem Gate-Anschluss 1219 des ersten Transistors 1005 anliegt, ergibt sich:

$$V_{reg} = A3 \, (V_{3+} - V_{3-}); \tag{26}$$

$$V_{reg} = A3 \, (V_{Out} - V_{bias}); \tag{27}$$

$$\Rightarrow V_{reg} = A3 \, (A1/(1+A1) \, (V_{bias} - I_{Mess} \, R1) - V_{bias}). \tag{28}$$

An dem ersten Knoten 908 der elektronischen Schaltung 1201 ergibt sich somit gemäß der Kirchhoff'schen Knotenregel:

$$I_{Sensor} = I_{Offset} + I_{Mess}. \tag{29}$$

Der Offsetstrom $I_{Offset}$ durch den ersten Transistor 1005 lässt sich mit dem bereits oben beschriebenen einfachen Transistormodell für den Fall der Sättigung beschreiben gemäß folgender Vorschrift:

$$I_{Offset} = k1 \, ([V_{dd} - V_{reg}] - |V_{thp}|)2. \tag{30}$$

Damit gibt es drei Gleichungen (28), (29), (30) für die drei Unbekannten, d.h. für den Messstrom $I_{Mess}$, den Offsetstrom $I_{Offset}$ und die Regelungsspannung $V_{Reg}$.

Die Lösung des Gleichungssystems sowie eine Grenzwertbildung für die Verstärkungsfaktoren A1, A3 $\rightarrow \infty$ führen unter anderem zu dem Ergebnis, dass der Offsetstrom $I_{Offset}$ gleich dem Sensorstrom $I_{Sensor}$ ist und der Messstrom $I_{Mess}$ gleich Null ist.

Die elektronische Schaltung 1201 bewirkt also bei geschlossenem Schalter 1217, dass der vollständige Sensorstrom $I_{Sensor}$ in den Offsetkanal 910 abfließt.

Wird der Schalter 1217 geöffnet, so wird die Regelung unterbrochen.

Das floatende Gate 1219 des ersten Transistors 1005 speichert in diesem Fall den Spannungswert, der einem spezifischen Offsetstrom $I_{Offset}$ entspricht.

Die Kapazität C 938 fungiert in diesem Fall als optionale Stützkapazität.

In dem zweiten Betriebsmodus, d.h. in der eigentlichen Messphase, lassen sich für die vier Unbekannten, d. h. für den Ausgangsstrom $I_{Out}$, die Ausgangsspannung $V_{Out}$ sowie die Größen $V_{g2}$ und $V_{2+}$ eine entsprechende Anzahl, d.h. vier Gleichungen (31), (32), (33), (34) aufstellen, wie im Folgenden beschrieben:

$$V_{Out} = A1/(1+A1) \ (V_{bias} - I_{Mess} \ R1); \tag{31}$$

$$V_{g2} = A2 \ (V_{2+} - V_{Out}); \tag{32}$$

$$I_{Out} = k2 \ (V_{g2} - V_{2+} - V_{thn})2 \tag{33}$$

$$V_{2+} = V_{bias} + I_{Out} \ R2. \tag{34}$$

Die vollständige Lösung des Gleichungssystems sowie eine Grenzwertbildung für die Verstärkungsfaktoren A1, A2 → ∞ führen zu folgenden Ergebnissen:

$$I_{Out} = - \ R1/R2 \ I_{Mess} = - \ R1/R2 \ t \ m; \tag{35}$$

$$V_{Out} = V_{bias} - I_{Mess} \ R1 = V_{bias} - R1 \ t \ m. \tag{36}$$

In den Vorschriften (35) und (36) zur Ermittlung der beiden Ausgangsgrößen, d.h. in dem Ausgangsstrom $I_{Out}$ und der Ausgangsspannung $V_{Out}$ kommt der Parameter m nunmehr lediglich in linearer Form vor.

Über das Verhältnis der elektrischen Widerstände R1, R2 kann für den Stromgradientenanstieg m in dem Ausgangsstrom $I_{Out}$ eine gewünschte Verstärkung eingestellt werden.

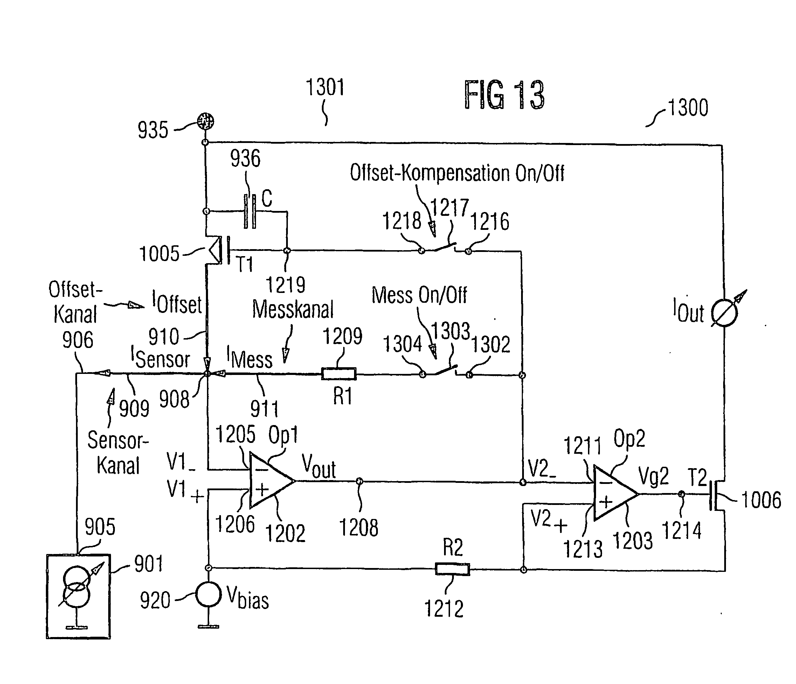

**Fig.13** zeigt eine Sensoranordnung 1300 gemäß einem vierten Ausführungsbeispiel der Erfindung.

Gleiche Strukturelemente mit gleicher Funktionalität der in **Fig.9, Fig.10, Fig.11** und **Fig.12** dargestellten elektronischen Schaltung 902 und des Sensors 901 werden bei der Sensoranordnung 1200 gemäß dem dritten Ausführungsbeispiel mit gleichen Bezugszeichen versehen.

Die elektronische Schaltung 1301 gemäß dem vierten Ausführungsbeispiel der Erfindung ist eine Variante der elektronischen Schaltung 1201 gemäß dem dritten Ausführungsbeispiel.

In der elektronischen Schaltung 1301 gemäß dem vierten Ausführungsbeispiel der Erfindung ist der fünfte Operationsverstärker 1204 im Vergleich zu der elektronischen Schaltung 1201 gemäß dem dritten Ausführungsbeispiel der Erfindung eingespart.

Der Ausgang 1208 des dritten Operationsverstärkers 1202 ist unmittelbar mit dem ersten Anschluss des auch in der elektronischen Schaltung 1201 vorgesehenen Schalters 1217 gekoppelt sowie ferner mit einem ersten Anschluss 1302 eines weiteren Schalters 1303, dessen zweiter Anschluss 1304 mit dem elektrischen Widerstand 1209 gekoppelt ist und über diesen wiederum mit dem ersten Knoten 908.

Für den Fall, dass keiner der Schalter 1217, 1303 geschlossen ist, kann jedoch gemäß diesem vierten Ausführungsbeispiel das Potential an der zweiten Elektrode 1404 von dem vorgegebenen gewünschten Bias-Spannungswert $V_{bias}$ wegdriften, so dass in diesem Fall ein geeignetes Timing für den Umschaltvorgang eingehalten werden sollte.

In diesem Dokument sind folgende Veröffentlichungen zitiert:

[1] R. Hintsche et al., Microbiosensors Using Electrodes Made in Si-Technology, Frontiers in Biosensorics, Fundamental Aspects, edited by F. W. Scheller et al., Dirk Hauser Verlag, Basel, S. 267 - 283, 1997

[2] M. Paeschke et al, Voltammetric Multichannel Measurements Using Silicon Fabricated Microelectrode Arrays, Electroanalysis, Vol. 7, Nr. 1, S. 1 - 8, 1996

[3] R. Hintsche et al, Microbiosensors using electrodes made in Si-technology, Frontiers in Biosensorics, Fundamental Aspects, edited by F. W. Scheller et al, Birkhauser Verlag, Basel, Schweiz, 1997

[4] P. van Gerwen, Nanoscaled Interdigitated Electrode Arrays for Biochemical Sensors, IEEE, International Conference on Solid-State Sensors and Actuators, Chicago, S.907 - 910, 16. - 19. Juni 1997

[5] WO 93/22678

[6] DE 196 10 115 A1

[7] C. Krause et al, Capacitive Detection of Surfactant Adsorption on Hydrophobized Gold Electrodes, Langmuir, Vol. 12, No. 25, S. 6059 - 6064, 1996

[8] V. Mirsky et al, Capacitive Monitoring of Protein Immobilization and Antigen-Antibody Reactions on Monomolecular Alkylthiol Films on Gold Electrodes, Biosensors & Bioelectronics, Vol. 12, No. 9 - 10, S. 977 - 989, 1997

[9] K. Hoffmann, VLSI-Entwurf, Oldenbourg Verlag München Wien, ISBN 3-486-23870-1, S. 308, 1996

[10] DE 196 09 621 C1

[11] US 5 726 597

[12] US 4 992 755

[13] US 4 987 379

[14] US 4 810 973

[15] US 4 495 470

[16] US 4 462 002

[17] US 4 322 687

[18] US 4 306 196

[19] Elektor, 11/98, Applikator, MLX90308, Programmierbares Sensor-Interface, S. 72 - 75, 1998

[20] P.D. Wilson et al, Universal sensor interface chip (USIC): specification and applications outline, Sensor Review, Vol. 16, Nr. 1, S. 18 - 21, ISSN 0260-2288, 1996

**Bezugszeichenliste**

| | |
|---|---|
| 100 | Prinzipskizze |
| 101 | erstes Diagramm |
| 102 | Strom |
| 103 | Zeit |
| 104 | Sensorsignalverlauf |
| 105 | Sensorkanal |
| 106 | Offsetkanal |
| 107 | Messkanal |
| 108 | Knoten |
| 109 | Strom-Offsetsignal |
| 110 | zweites Diagramm |
| 111 | Strom |
| 112 | Zeit |

| 113 | Zeit |
|---|---|
| 114 | Strom |
| 115 | Messsignalverlauf |
| 116 | drittes Diagramm |
| | |
| 200 | Sensor |
| 201 | Elektrode |
| 202 | Elektrode |
| 203 | Isolator |
| 204 | Elektrodenanschluss |
| 205 | Elektrodenanschluss |
| 206 | DNA-Sondenmolekül |
| 207 | Elektrolyt |
| 208 | DNA-Stränge |
| | |
| 300 | Interdigitalelektrode |
| | |
| 400 | Biosensor |
| 401 | Erste Elektrode |
| 402 | Zweite Elektrode |
| 403 | Isolatorschicht |
| 404 | Haltebereich erste Elektrode |
| 405 | DNA-Sondenmolekül |
| 406 | Elektrolyt |
| 407 | DNA-Strang |
| 408 | Enzym |
| 409 | Spaltbares Molekül |
| 410 | Negativ geladenes erstes Teilmolekül |
| 411 | Pfeil |
| 412 | Weitere Lösung |
| 413 | Oxidiertes erstes Teilmolekül |
| 414 | Reduziertes erstes Teilmolekül |
| | |
| 500 | Diagramm |
| 501 | Elektrischer Strom |
| 502 | Zeit |
| 503 | Kurvenverlauf Strom-Zeit |
| 504 | Offsetstrom |
| | |
| 600 | Zeitdiagramm |
| 601 | Sensorstrom |
| 602 | erste Phase |
| 603 | Umschaltzeitpunkt |
| 604 | zweite Phase |
| 605 | Beginn Redox-Recycling |
| 606 | Einschwingphase |
| 607 | Zeit |
| | |
| 700 | zweites Zeitdiagramm |
| 701 | erstes Stromsignal |
| 702 | zweites Stromsignal |
| 703 | Sensorstrom |
| 704 | Zeit |
| 705 | erster Dynamikbereich |
| 706 | zweiter Dynamikbereich |
| | |
| 800 | Messsignaldiagramm |
| 801 | Schwellenstrom |

802     Messstrom
803     Zeit
804     fester Dynamikbereich

900     Sensoranordnung
901     Sensor
902     elektronische Schaltung
903     elektronisches Eingangs-Regelungsteil elektronische Schaltung
904     Ausgangsteil elektronische Schaltung
905     Ausgang Sensor
906     elektrische Leitung
907     Eingang elektronische Schaltung
908     erster Knoten
909     Sensorkanal
910     Offsetkanal
911     Messkanal
912     differenzspannungsgesteuerte Spannungsquelle
913     erste spannungsgesteuerte Stromquelle
914     zweite spannungsgesteuerte Stromquelle
915     dritte spannungsgesteuerte Stromquelle
916     Spannungswertspeicher
917     erster Schalter
918     zweiter Schalter
919     Steuereinheit
920     Bias-Spannungsquelle
921     erster Anschluss erste spannungsgesteuerte Stromquelle
922     zweiter Anschluss erste spannungsgesteuerte Stromquelle
923     erster Anschluss Spannungswertspeicher
924     zweiter Anschluss Spannungswertspeicher
925     erster Anschluss erster Schalter
926     zweiter Anschluss erster Schalter
927     zweiter Knoten
928     erster Anschluss zweite spannungsgesteuerte Stromquelle
929     zweiter Anschluss zweite spannungsgesteuerte Stromquelle
930     erster Anschluss zweiter Schalter
931     zweiter Anschluss zweiter Schalter
932     Ausgang differenzspannungsgesteuerte Spannungsquelle
933     erster Anschluss dritte spannungsgesteuerte Stromquelle
934     zweiter Anschluss dritte spannungsgesteuerte Stromquelle
935     Ausgang
936     erster Eingang differenzspannungsgesteuerte Spannungsquelle
937     zweiter Eingang differenzspannungsgesteuerte Spannungsquelle
938     Kondensator
939     Kondensator

1000    Sensoranordnung
1001    elektronische Schaltung
1002    erster Operationsverstärker
1003    negativer Eingang erster Operationsverstärker
1004    positiver Eingang erster Operationsverstärker
1005    erster Transistor
1006    zweiter Transistor
1007    dritter Transistor
1008    weiterer Transistor
1009    weiterer Transistor
1010    weiterer Transistor
1011    Kaskaden-Spannungsquelle
1012    Ausgang erster Operationsverstärker

| | |
|---|---|
| 1100 | Sensoranordnung |
| 1101 | elektronische Schaltung |
| 1102 | zweiter Operationsverstärker |
| 1103 | negativer Eingang zweiter Operationsverstärker |
| 1104 | positiver Eingang zweiter Operationsverstärker |
| 1105 | Rückkoppelungsleitung |
| 1106 | Rückkoppelungswiderstand |
| 1107 | Ausgang zweiter Operationsverstärker |
| 1108 | positiver Eingang erster Operationsverstärker |
| 1109 | erster Operationsverstärker |
| 1110 | negativer Eingang erster Operationsverstärker |
| 1111 | Ausgang erster Operationsverstärker |
| | |
| 1200 | Sensoranordnung |
| 1201 | elektronische Schaltung |
| 1202 | dritter Operationsverstärker |
| 1203 | vierter Operationsverstärker |
| 1204 | fünfter Operationsverstärker |
| 1205 | negativer Eingang dritter Operationsverstärker |
| 1206 | positiver Eingang dritter Operationsverstärker |
| 1207 | negativer Eingang fünfter Operationsverstärker |
| 1208 | Ausgang dritter Operationsverstärker |
| 1209 | Rückkoppelwiderstand |
| 1210 | positiver Eingang fünfter Operationsverstärker |
| 1211 | negativer Eingang vierter Operationsverstärker |
| 1212 | zweiter elektrischer Widerstand |
| 1213 | positiver Eingang vierter Operationsverstärker |
| 1214 | Ausgang vierter Operationsverstärker |
| 1215 | Ausgang fünfter Operationsverstärker |
| 1216 | erster Anschlussschalter |
| 1217 | Schalter |
| 1218 | zweiter Anschlussschalter |
| 1219 | Gate-Anschluss erster Transistor |
| | |
| 1300 | Sensoranordnung |
| 1301 | elektronische Schaltung |
| 1302 | erster Anschluss weiterer Schalter |
| 1303 | weiterer Schalter |
| 1304 | zweiter Anschluss weiterer Schalter |
| | |
| 1400 | Sensoranordnung |
| 1401 | Sensor |
| 1402 | elektronische Schaltung |
| 1403 | erste Elektrode |
| 1404 | zweite Elektrode |
| 1405 | Substrat |
| 1406 | Haftschicht |
| 1407 | DNA-Sondenmolekül |
| 1408 | zu untersuchende Lösung |
| 1409 | DNA-Strang |
| 1410 | Enzym |
| 1411 | zu spaltendes Molekül |
| 1412 | negativ geladenes Teilmolekül |
| 1413 | Pfeil |
| 1414 | positiv geladenes Teilmolekül |
| 1415 | negativ geladenes Teilmolekül |
| 1416 | Sensorstrom |
| 1417 | Ausgangsstrom |

1418    Ausgang

**Patentansprüche**

1.  Elektronische Schaltung (902) zum Verarbeiten eines ersten Sensorsignals, welches ein Strom-Offsetsignal und ein zeitabhängiges Messsignal aufweist, oder eines zweiten Sensorsignals, welches im wesentlichen das Strom-Offsetsignal aufweist,

    -   mit einem Eingang (907), an dem das erste Sensorsignal oder das zweite Sensorsignal anlegbar ist,
    -   mit einem mit dem Eingang (907) gekoppelten ersten Signalpfad (910) zum Ableiten des Strom-Offsetsignals,
    -   mit einem mit dem Eingang (907) gekoppelten zweiten Signalpfad (911) zum Ableiten des zeitabhängigen Messsignals,
    -   mit einer Regelungseinheit (903), die derart eingerichtet ist, dass eine Regelung erfolgt derart, dass für den Fall, dass das zweite Sensorsignal an dem Eingang (907) anliegt, das zweite Sensorsignal im wesentlichen nur durch den ersten Signalpfad (910) geführt wird,
    -   wobei in dem ersten Signalpfad (910) ein Spannungswertspeicherelement (916) enthalten ist, mit dem das zweite Sensorsignal gespeichert werden kann, wenn das zweite Sensorsignal an dem Eingang (907) anliegt, und
    -   wobei das in dem Spannungswertspeicherelement (916) gespeicherte zweite Sensorsignal in dem Fall, dass das erste Sensorsignal an dem Eingang (907) anliegt, dem Eingang zuführbar ist.

2.  Elektronische Schaltung (902) nach Anspruch 1,

    -   mit einem Ausgang (935), an dem ein Ausgangssignal abgreifbar ist,
    -   mit einem Schaltelement (917, 918), mit dem der erste Signalpfad oder der zweite Signalpfad unabhängig voneinander mit dem Ausgang (935) gekoppelt werden können oder von dem Ausgang (935) getrennt werden können.

3.  Elektronische Schaltung (902) nach Anspruch 1 oder 2,
    bei der das Spannungswertspeicherelement (916) mindestens einen Kondensator (938) aufweist.

4.  Elektronische Schaltung (902) nach einem der Ansprüche 1 bis 3,
    bei der in dem ersten Signalpfad eine von der Regelungseinheit gesteuerte erste Stromquelle aufweist.

5.  Elektronische Schaltung (902) nach Anspruch 4,
    bei der die Regelungseinheit (903) derart eingerichtet ist, dass für den Fall, dass das durch den zweiten Signalpfad geführte Signal einen vorgegebenen Schwellenwert überschreitet, die gesteuerte erste Stromquelle (913) einen dem durch den zweiten Signalpfad geführten Signal entsprechenden Strom erzeugt, der dem Eingang (907) zugeführt werden kann.

6.  Elektronische Schaltung (902) nach einem der Ansprüche 1 bis 5,
    bei der die Regelungseinheit (903) eine Spannungsquelle (913) aufweist.

7.  Elektronische Schaltung (902) nach Anspruch 6,
    bei der die Spannungsquelle (913) als spannungsgesteuerte Spannungsquelle ausgestaltet ist.

8.  Elektronische Schaltung (902) nach Anspruch 7,
    bei der die Spannungsquelle (913) als differenzspannungsgesteuerte Spannungsquelle ausgestaltet ist.

9.  Elektronische Schaltung (902) nach einem der Ansprüche 1 bis 8,
    bei der eine gesteuerte zweite Stromquelle (929) in dem zweiten Signalpfad (911) vorgesehen ist.

10. Elektronische Schaltung (902) nach einem der Ansprüche 1 bis 9,
    mit einer zwischen den Ausgang (935) und die Signalpfade (910, 911) geschaltete gesteuerte dritte Stromquelle (915), die das Ausgangssignal erzeugt.

11. Sensoranordnung (900) mit einer elektronischen Schaltung (900) nach einem der Ansprüche 1 bis 10.

**12.** Sensoranordnung (900) nach Anspruch 11,
bei der die Sensoranordnung mit der elektronischen Schaltung als eine integrierte Schaltung ausgebildet ist.

**13.** Sensoranordnung (900) nach Anspruch 11 oder 12, eingerichtet zum Erfassen makromolekularer Biopolymere.

**14.** Verfahren zum Verarbeiten eines Sensorsignals, welches ein Strom-Offsetsignal und ein zeitabhängiges Messsignal aufweist,

- bei dem in einer ersten Phase ein erstes Sensorsignal an einen Eingang (907) einer elektronischen Schaltung (902) angelegt wird, wobei das erste Sensorsignal im wesentlichen das Strom-Offsetsignal aufweist,
- bei dem das erste Sensorsignal im wesentlichen in einen mit dem Eingang (907) gekoppelten ersten Signalpfad (910) geführt wird und gespeichert wird,
- bei dem in einer zweiten Phase ein zweites Sensorsignal an den Eingang (907) angelegt wird, wobei das zweite Sensorsignal das Strom-Offsetsignal sowie ein zeitabhängiges Messsignal aufweist,
- bei dem in der zweiten Phase das gespeicherte erste Sensorsignal dem Eingang (907) über den ersten Signalpfad (910) zugeführt wird, so dass über einen mit dem Eingang (907) gekoppelten zweiten Signalpfad (911) im wesentlichen das zeitabhängige Messsignal geführt wird.

**15.** Verfahren nach Anspruch 14,
eingesetzt zum Erfassen makromolekularer Biopolymere.

**16.** Verfahren nach Anspruch 15,
bei dem in der zweiten Phase mittels eines Sensors (901) das zweite Sensorsignal ermittelt wird während eines Redox-Recycling-Verfahrens zum Erfassen makromolekularer Biopolymere.


**Claims**

**1.** An electronic circuit (902) for processing a first sensor signal, which comprises a current offset signal and a time-dependent measurement signal, or a second sensor signal, which substantially comprises the current offset signal,

- with an input (907) to which the first sensor signal or the second sensor signal can be applied,
- having a first signal path (910), coupled to the input (907), to lead the current offset signal away,
- having a second signal path (911), coupled to the input (907), to lead the time-dependent measurement signal away,
- having a control unit (903) which is set up such that control is carried out in such a way that, for the case in which the second sensor signal is applied to the input (907), the second sensor signal is carried substantially only by the first signal path (910),
- a voltage value storage element (916) being contained in the first signal path (910), with which the second sensor signal can be stored when the second sensor signal is applied to the input (907), and
- in the case in which the first sensor signal is applied to the input (907), it being possible for the second sensor signal stored in the voltage value storage element (916) to be supplied to the input.

**2.** The electronic circuit (902) as claimed in claim 1,

- having an output (935) at which an output signal can be tapped off,
- having a switching element (917, 918), with which the first signal path or the second signal path can be coupled to the output (935) independently of each other or can be separated from the output (935).

**3.** The electronic circuit (902) as claimed in claim 1 or 2, in which the voltage value storage element (916) has at least one capacitor (938).

**4.** The electronic circuit (902) as claimed in one of claims 1 to 3, in which in the first signal path has a first current source controlled by the control unit.

**5.** The electronic circuit (902) as claimed in claim 4, in which the control unit (903) is set up in such a way that, for the case in which the signal carried by the second signal path exceeds a predefined threshold value, the controlled first current source (913) generates a current corresponding to the signal carried by the second signal path, which current can be supplied to the input (907).

6. The electronic circuit (902) as claimed in one of claims 1 to 5, in which the control unit (903) has a voltage source (913).

7. The electronic circuit (902) as claimed in claim 6, in which the voltage source (913) is configured as a voltage-controlled voltage source.

8. The electronic circuit (902) as claimed in claim 7, in which the voltage source (913) is configured as a differential-voltage-controlled voltage source.

9. The electronic circuit (902) as claimed in one of claims 1 to 8, in which a controlled second current source (929) is provided in the second signal path (911).

10. The electronic circuit (902) as claimed in one of claims 1 to 9, comprising a controlled third current source (915) which is connected between the output (935) and the signal paths (910, 911) and which generates the output signal.

11. A sensor arrangement (900) comprising an electronic circuit (902) as claimed in one of claims 1 to 10.

12. The sensor arrangement (900) as claimed in claim 11, in which the sensor arrangement with the electronic circuit is formed as an integrated circuit.

13. The sensor arrangement (900) as claimed in claim 11 or 12, set up to detect macromolecular biopolymers.

14. A method for processing a sensor signal, which comprises a current offset signal and a time-dependent measurement signal,

   • in which, in a first phase, a first sensor signal is applied to an input (907) of an electronic circuit (902), the first sensor signal substantially comprising the current offset signal,
   • in which the first sensor signal is substantially led into a first signal path (910) coupled to the input (907) and is stored,
   • in which, in a second phase, a second sensor signal is applied to the input (907), the second sensor signal comprising the current offset signal and a time-dependent measurement signal,
   • in which, in the second phase, the stored first sensor signal is supplied to the input (907) via the first signal path (910), so that the time-dependent measurement signal is substantially carried by a second signal path (911) coupled to the input (907).

15. The method as claimed in claim 14, used to detect macromolecular biopolymers.

16. The method as claimed in claim 15, in which, in the second phase, the second sensor signal is determined by means of a sensor (901) during a redox recycling process for detecting macromolecular biopolymers.

**Revendications**

1. Circuit électronique (902) destiné au traitement d'un premier signal de capteur, ce dernier comportant un signal offset ampèremétrique et un signal de mesure dépendant du temps, ou au traitement d'un deuxième signal de capteur comportant essentiellement le signal offset ampèremétrique,

   - avec une entrée (907) à laquelle peut être appliqué le premier signal de capteur ou le deuxième signal de capteur,
   - avec un premier chemin signal (910) accouplé à l'entrée (907) et destiné à la dérivation du signal offset ampèremétrique,
   - avec un deuxième chemin signal (911) accouplé à l'entrée (907) et destiné à la dérivation du signal de mesure dépendant du temps,
   - avec un organe de régulation (903) configuré de telle sorte qu'une régulation a lieu de telle sorte que si le deuxième signal de capteur est appliqué à l'entrée (907), ledit deuxième signal de capteur n'est essentiellement conduit que par le premier chemin signal (910),

- une cellule de mémoire de la valeur de la tension (916) étant comprise dans le premier chemin signal (910), au moyen de laquelle peut être mémorisé le deuxième signal de capteur, lorsque ledit deuxième signal de capteur est appliqué à l'entrée (907), et
- le deuxième signal de capteur mémorisé dans la cellule de mémoire de la valeur de la tension (916) pouvant être envoyé à l'entrée dans le cas où le premier signal de capteur est appliqué à l'entrée (907).

2. Circuit électronique (902) selon la revendication 1,

- avec une sortie (935) sur laquelle peut être prélevé un signal de sortie,
- avec un circuit logique (917, 918) au moyen duquel on peut accoupler à la sortie (935) le premier chemin signal ou le deuxième chemin signal ou les désaccoupler de la sortie (935) et ce, indépendamment l'un de l'autre.

3. Circuit électronique (902) selon la revendication 1 ou 2, où la cellule de mémoire de la valeur de la tension (916) comporte au moins un condensateur (938).

4. Circuit électronique (902) selon l'une quelconque des revendications 1 à 3, où le premier chemin signal comporte une première source de courant régulée par l'organe de régulation.

5. Circuit électronique (902) selon la revendication 4, où l'organe de régulation (903) est configuré de telle sorte que dans le cas où le signal conduit par le deuxième chemin signal dépasse une valeur de seuil prédéfinie, la première source de courant (913) régulée génère un courant correspondant au signal dirigé par le deuxième chemin signal et pouvant être envoyé à la sortie (907).

6. Circuit électronique (902) selon l'une quelconque des revendications 1 à 5, où l'organe de régulation (903) comporte une source de tension (913).

7. Circuit électronique (902) selon la revendication 6, où la source de tension (913) est configurée comme source de tension régulée en tension.

8. Circuit électronique (902) selon la revendication 7, où la source de tension (913) est configurée comme source de tension régulée en la tension différentielle.

9. Circuit électronique (902) selon l'une quelconque des revendications 1 à 8, où une deuxième source de courant régulée (929) est prévue dans le deuxième chemin signal (911).

10. Circuit électronique (902) selon l'une quelconque des revendication 1 à 9, avec une troisième source de courant régulée (915) intercalée entre la sortie (935) et les chemins signaux (910, 911) et générant le signal de sortie.

11. Ensemble capteur (900) avec un circuit électronique (900) selon l'une quelconque des revendications 1 à 10.

12. Ensemble capteur (900) selon la revendication 11, où ledit ensemble capteur forme avec le circuit électronique un circuit intégré.

13. Ensemble capteur (900) selon la revendication 11 ou 12 configuré pour la saisie de biopolymères macromoléculaires.

14. Procédé pour traiter un signal de capteur comportant un signal offset ampèremétrique et un signal de mesure dépendant du temps,

- selon lequel dans une première phase un premier signal de capteur est appliqué à une entrée (907) d'un circuit électronique (902), ledit premier signal de capteur comportant essentiellement le signal offset ampèremétrique,
- selon lequel le premier signal de capteur est essentiellement envoyé dans un premier chemin signal (910) accouplé à l'entrée (907), puis mémorisé,
- selon lequel dans une deuxième phase un deuxième signal de capteur est appliqué à l'entrée (907), ledit deuxième signal de capteur comportant le signal offset ampèremétrique et un signal de mesure dépendant du temps,

- selon lequel dans la deuxième phase le premier signal de capteur mémorisé est envoyé à l'entrée (907) via le premier chemin signal (910), de telle sorte que le signal de mesure dépendant du temps est essentiellement envoyé par l'intermédiaire d'un deuxième chemin signal (911) accouplé à l'entrée (907).

15. Procédé selon la revendication 14, mis en oeuvre pour saisir des biopolymères macromoléculaires.

16. Procédé selon la revendication 15, selon lequel dans la deuxième phase on détermine le deuxième signal de capteur au moyen d'un capteur (901) durant un procédé de recyclage Redox destiné à la saisie de biopolymères macromoléculaires.

# FIG 1

## FIG 2A

## FIG 2B

## FIG 3

## FIG 4A

## FIG 4B

## FIG 4C

## FIG 5

FIG 6

FIG 7

FIG 8

# FIG 9

EP 1 328 799 B1

# FIG 10

# FIG 11

FIG 12

EP 1 328 799 B1

FIG 13

EP 1 328 799 B1

# FIG 14